# EUROPÄISCHE PATENTSCHRIFT

(11) **EP 3 414 138 B1**
(45) Veröffentlichungstag und Bekanntmachung des Hinweises auf die Patenterteilung: **08.04.2020**
(21) Anmeldenummer: 17702866.9
(22) Anmeldetag: 02.02.2017
(51) Int. Cl.: B60T 15/20

(54) **RELAISVENTILEINRICHTUNG EINER PNEUMATISCHEN ODER ELEKTRO-PNEUMATISCHEN KRAFTFAHRZEUGBREMSEINRICHTUNG**
ARRANGEMENT OF A RELY VALVE FOR A PNEUMATIC OR ELECTRO-PNEUMATIC BRAKING SYSTEM FOR VEHICLES
ARRANGEMENT D'UNE VANNE RELAIS POUR UN SYSTÈME DE FREINS POUR VÉHICULE PNEUMATIQUE OU ÉLECTRIQUE-PNEUMATIQUE

(30) Priorität: 10.02.2016 DE 102016102278
(43) Veröffentlichungstag der Anmeldung: 19.12.2018
(73) Patentinhaber: KNORR-BREMSE Systeme für Nutzfahrzeuge GmbH, 80809 München (DE)
(72) Erfinder: HERGES, Michael, 80935 München (DE)
(86) Internationale Anmeldenummer: PCT/EP2017/052244
(87) Internationale Veröffentlichungsnummer: WO 2017/137302

(56) Entgegenhaltungen:
- EP-A1- 2 581 280
- DE-A1- 19 932 470
- DE-C1- 19 504 394

## Beschreibung

Die Erfindung betrifft eine Relaisventileinrichtung einer pneumatischen oder elektropneumatischen Kraftfahrzeugbremseinrichtung mit einem ersten Bremskreis und einem zweiten Bremskreis, welche in oder an einem Ventilblock wenigstens Folgendes beinhaltet: Einen ersten Arbeitsanschluss für einen ersten, einer ersten Fahrzeugseite zugeordneten pneumatischen Bremszylinder des ersten Bremskreises, welcher mit einer ersten Arbeitskammer verbunden ist, in welcher ein erster Arbeitsdruck ansteht, einen ersten Vorratsanschluss für wenigstens einen ersten, dem ersten Bremskreis zugeordneten Druckluftvorrat, welcher mit einer ersten Drucklufteingangskammer verbunden ist, eine Entlüftung, welche mit der Atmosphäre verbunden ist, ein erstes, ein erstes Ventilglied beinhaltendes Doppelsitzventil als kombiniertes Einlass-/Auslassventil, über dessen erstes Einlassventil die erste Arbeitskammer mit der ersten Drucklufteingangskammer und über dessen erstes Auslassventil die erste Arbeitskammer mit der Entlüftung verbindbar ist, einen ersten, im Ventilblock beweglich geführten Relaiskolben, der das erste Doppelsitzventil betätigt, und einen ersten Steueranschluss, welcher mit einer ersten Steuerkammer verbunden ist, zur Einsteuerung eines ersten Steuerdrucks des ersten Bremskreises in eine erste Steuerkammer, um den ersten Relaiskolbens zu betätigen, gemäß dem Oberbegriff von Anspruch 1.

Die Erfindung betrifft auch ein elektro-pneumatisches Druckregelmodul gemäß Anspruch 11, welches außer der Relaisventileinrichtung noch weitere Baugruppen beinhaltet sowie eine elektro-pneumatische Kraftfahrzeugbremseinrichtung gemäß Anspruch 15, umfassend wenigstens ein elektro-pneumatisches Druckregelmodul.

Bei bekannten, als Zweikreisbremsanlage ausgebildeten elektro-pneumatischen Kraftfahrzeug-Betriebsbremsanlage ist sowohl den Bremszylindern der Vorderachse als auch den Bremszylindern der Hinterachse des Fahrzeugs zur Steuerung des Bremsdruckes je ein ein- oder mehrkanaliges Druckregelmodul mit je einer Relaisventileinrichtung zugeordnet. Durch die Aufteilung der Betriebsbremsanlage in zwei Bremskreise wird sichergestellt, dass bei einem Ausfall des einen Bremskreises die dem jeweils anderen Bremskreis zugeordneten Bremszylinder noch mit Druckluft versorgen werden, so dass das Fahrzeug noch verzögert werden kann.

Bei Ausfall des Hinterachs-Betriebsbremskreises wird noch eine gute Verzögerung des Kraftfahrzeugs erzielt, da bedingt durch die beim Bremsen stattfindende dynamische Achslastverlagerung der größere Anteil der Bremskraft von den Bremsen an den Rädern der Vorderachse aufgebracht wird. Fällt jedoch der den Rädern der Vorderachse des Fahrzeugs zugeordnete Betriebsbremskreis aus, kann wegen der dynamischen Achslastverlagerung nicht mehr garantiert werden, dass die vom Gesetzgeber vorgeschriebene Verzögerung alleine von den Bremsen der Räder an der Hinterachse aufgebracht werden kann. Dies ist insbesondere auch dann kritisch, wenn es sich um ein alleine fahrendes Zugfahrzeug für Sattelauflieger mit niedrigem Leergewicht, kurzem Radstand und hohem Schwerpunkt handelt, da die Räder der Hinterachse des alleine fahrende Zugfahrzeugs nicht ausreichend belastet werden, um eine ausreichende Verzögerung zu gewährleisten.

Um dieses Problem zu lösen schlägt beispielsweise DE 195 04 394 C1 für eine rein pneumatische Bremsanlage ein zusätzliches, über den Vorderachs-Bremskreis und den Hinterachs-Bremskreis zweikreisig ansteuerbares Steuerventil vor, über welches noch ein Bremszylinder der Vorderachse betätigt werden kann, wenn der Vorderachsbremskreis ausfällt. Die Druckmitteleingangskammer dieses zusätzlichen Steuerventils ist dabei von mit dem Druckluftvorrat für die Vorderachse wie auch mit einem in Bezug auf den Druckluftvorrat der Hinterachse unabhängigen Druckluftvorrat verbunden. Das zusätzliche Steuerventil beinhaltet eine Relaisventileinrichtung mit zwei Relaiskolben, welche unabhängig voneinander ein Doppelsitzventil zum Belüften des einen Bremszylinders der Vorderachse betätigen können. Nachteilig dabei ist jedoch, dass das erste Steuerventil ein zusätzliches Ventil darstellt, welches zum einen Bauraum als auch eine entsprechende Verrohrung beansprucht. Zum andern werden mit dem zusätzlichen Steuerventil nicht alle Schadensfälle abgedeckt, z.B. ein Abriss der pneumatischen Leitung zwischen dem zusätzlichen Steuerventil und dem zugeordneten Bremszylinder.

Eine gattungsgemäße Relaisventileinrichtung ist beispielsweise aus DE 199 32 470 A1 bekannt und dort von Druckregelmoduln einer druckluftbetätigten elektropneumatischen Fahrzeugbremsanlage eines Nutzfahrzeugs umfasst. Dabei dient ein erster elektro-pneumatischer Betriebsbremskreis als Hinterachs-Bremskreis für die beiden Räder der Hinterachse und ein zweiter elektro-pneumatischer Bremskreis als Vorderachs-Bremskreis für die der Vorderachse. Bei Ausfall des einen Bremskreises soll der andere Bremskreis des Nutzfahrzeugs noch ausreichend verzögern. Die Bremszylinder des Hinterachs-Bremskreises sind jeweils als Kombibremszylinder ausgebildet, die über ein 2-Kanal-Druckregelmdoul in Abhängigkeit von einem dem Hinterachs-Bremskreis zugeordneten Steuersignal eines Mehrkreis-Bremswertgebers mit einem Druckluftspeicher für den Hinterachs-Bremskreis verbindbar ist. Die Bremszylinder des Vorderachs-Bremskreises sind über zwei 1-Kanal-Druckregelmodule in Abhängigkeit von einem dem Vorderachs- Bremskreis zugeordneten Steuersignal des Mehrkreis-Bremswertgebers mit einem Druckluftspeicher für den Vorderachs-Bremskreis verbindbar. Die beiden 1-Kanal-Druckregelmodule weisen jeweils einen mit dem Druckluftspeicher für den Vorderachs-Bremskreis verbindbaren ersten Druckeingang und einen mit einem Steuerausgang des Mehrkreis-Bremswertgebers bzw. Betriebsbremsventils verbundenen zweiten Druckeingang auf, durch welchen ein vom Betriebsbremsventil abgeleiteter Vorderachs-Steuerdruck eingesteuert wird. Die beiden 1-Kanal-Druckregelmodule weisen ferner mit den Bremszylindern der Vorderachse verbundene Druckausgänge auf.

Die Druckregelmodule an der Vorderachse bzw. an der Hinterachse weisen in bekannter Weise jeweils eine Einlass-/Auslassmagnetventilkombination, ein Back-up-Magnetventil, ein von der Einlass-/Auslassmagnetventilkombination pneumatisch gesteuerte Relaisventileinrichtung, einen mit dessen Arbeitsanschluss in Verbindung stehenden Drucksensor sowie ein elektronisches Steuergerät auf, welches die Einlass-/Auslassmagnetventilkombination und das Back-up-Magnetventil steuert und den Druck am Arbeitsanschluss repräsentierende Signale empfängt, um einen Ist-Bremsdruck am Arbeitsanschluss an einen von einem elektrischen Kanal eines Fußbremsmoduls vorgegebenen Soll-Bremsdruck anzupassen. Der Arbeitsanschluss der Relaisventileinrichtung ist dann mit dem jeweils zugeordneten pneumatischen Bremszylinder verbunden. Bei Ausfall eines elektrischen Bremskreises schaltet das Back-up-Magnetventil unbestromt den im jeweiligen pneumatischen Kanal des Fußbremsmoduls herrschenden Steuerdruck auf den Steueranschluss der Relaisventileinrichtung, um einen Bremsdruckaufbau am Arbeitsanschluss zu bewirken.

Um das eingangs beschriebene Problem der dynamische Achslastverlagerung beim Bremsvorgang zu lösen, ist bei der bekannten Fahrzeugbremsanlage eine zwischen einer Steuerventileinrichtung und einem Bremszylinder des rechten Vorderrades angeordnete Umschaltventileinrichtung vorgesehen, die bei Ausfall des Vorderachs-Bremskreises Druckmittel aus dem vom Vorderachs-Bremskreis unabhängigen Druckluftspeicher zu diesem Bremszylinder schaltet, um dort als Ersatz für den ausgefallenen Vorderachs-Bremsdruck zu dienen. Die Umschaltventileinrichtung umfasst ein erstes Wechselventil, welches den größeren von Vorratsdrücken aus dem Druckluftspeicher für den Vorderachs-Bremskreis und einem Hilfs-Druckluftspeicher an einen Vorratsanschluss eines Relaisventils der Umschaltventileinrichtung steuert, welches steuerseitig vom Steuerdrucks des Hinterachs-Bremskreises gesteuert ist und dessen Arbeitsanschluss mit einem ersten Eingang eines zweiten Wechselventils verbunden ist, dessen zweiter Eingang vom Steuerdruck des Vorderachs-Bremskreises beaufschlagt ist und dessen Ausgang mit den Back-up-Magnetventilen der 1-Kanal-Druckregelmodule der Vorderachse verbunden ist. Folglich ist durch die beiden Wechselventile sichergestellt, dass Ersatz für einen z.B. aufgrund einer Leckage ausgefallenen Vorratsdruck und Steuerdruck für den als Sicherheitsebene unterlegten pneumatischen Vorderachs-Bremskreis vorhanden ist.

Unbefriedigend bei diesem Stand der Technik ist jedoch, dass solche Wechselventile verklemmen können und dann keine zuverlässige Zuschaltung des betreffenden Drucks mehr gewährleistet ist. Außerdem stellen sie zusätzlich zu verrohrende Ventile dar, was einen gewissen Aufwand erfordert.

Der Erfindung liegt deshalb die Aufgabe zugrunde, eine Relaisventileinrichtung der eingangs erwähnten Art zu schaffen, welche einerseits bei einem Defekt an einem Bremskreis zuverlässig ein sicheres Verzögern des Fahrzeugs gewährleistet und andererseits Bauraum sparend und kostengünstig herstellbar ist.

Diese Aufgabe wird erfindungsgemäß durch die Merkmale von Anspruch 1 gelöst.

### Offenbarung der Erfindung

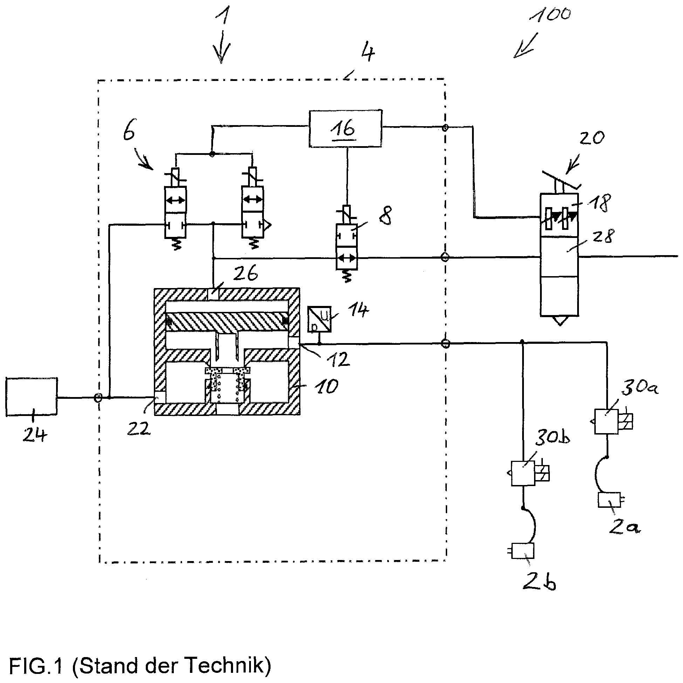

Die Erfindung basiert auf einem bekannten 1-Kanal-Druckregelmodul 1, wie es beim Stand der Technik gemäß **Fig.1** in einer elektro-pneumatischen Fahrzeugbremsanlage 100 für die Erzeugung des Bremsdrucks an beiden Bremszylindern 2a, 2b rechts und links an der Vorderachse eingesetzt wird. Das 1-Kanal-Druckregelmodul 1 weist in einem Modulgehäuse 4 eine Einlass-/Auslassmagnetventilkombination 6, ein Backup-Magnetventil 8, ein von der Einlass-/Auslassmagnetventilkombination 6 pneumatisch gesteuerte Relaisventileinrichtung 10, einen mit deren erstem Arbeitsanschluss 12 in Verbindung stehenden Drucksensor 14 sowie ein elektronisches Steuergerät 16 auf, welches die Einlass-/Auslassmagnetventilkombination 6 und das Backup-Magnetventil 8 steuert und den Druck am ersten Arbeitsanschluss 12 repräsentierende Signale empfängt, um einen Ist-Bremsdruck am ersten Arbeitsanschluss 12 an einen von einem elektrischen Kanal 18 eines Fußbremsmoduls 20 vorgegebenen Soll-Bremsdruck anzupassen. Der erste Arbeitsanschluss 12 der Relaisventileinrichtung 10 ist dann mit den beiden pneumatischen Bremszylindern 2a, 2b der Vorderachse verbunden, ein erster Vorratsanschluss 22 mit einem Druckluftvorrat 24 für die Vorderachse und ein erster Steueranschluss 26 der Relaisventileinrichtung 10 einerseits mit der Einlass-/Auslassmagnetventilkombination 6 und andererseits mit dem Ausgang des Backup-Magnetventils 8, dessen Eingang mit einem der Vorderachse zugeordneten ersten Kanal 28 des Fußbremsmoduls 20 verbunden ist. Damit wird ein erster pneumatischer Bremskreis gesteuert. Ein erster elektro-pneumatischer Bremskreis wird von dem in das elektronische Steuergerät 16 eingesteuerte Signal des elektrischen Kanals 18 des Fußbremsmoduls 20 gesteuert.

Dem erste Arbeitsanschluss 12 der Relaisventileinrichtung 10 und den Bremszylindern 2a, 2b der Vorderachse sind optional ABS-Drucksteuerventile 30a, 30b für die Bremsschlupfregelung zwischengeordnet. Bei Ausfall des ersten elektro-pneumatischen Bremskreises schaltet das Backup-Magnetventil 8 unbestromt den im ersten pneumatischen Kanal 28 des Fußbremsmoduls 20 herrschenden Steuerdruck auf den ersten Steueranschluss 26 der Relaisventileinrichtung 10, um einen Bremsdruckaufbau am ersten Arbeitsanschluss 12 zu bewirken.

Um dem oben beschriebenen Problem der dynamischen Achslastverlagerung beim Bremsen in Verbindung mit einer ausreichenden Bremskraft im Falle eines Defekts des Vorderachsbremskreises sowie mit einem möglichst einfachen und kostengünstigen Aufbau zu begegnen, schlägt die Erfindung aufbauend auf dem in Fig.1 beschriebenen Stand der Technik vor, ein solches bekanntes, zur Steuerung der Bremszylinder der Vorderachse verwendetes 1-Kanal-Druckregelmodul derart zu erweitern, dass in oder an dem Ventilblock der Relaisventileinrichtung weiterhin wenigstens Folgendes vorgesehen ist:
g) ein zweiter Arbeitsanschluss für einen zweiten, einer zweiten Fahrzeugseite zugeordneten pneumatischen Bremszylinder des ersten Bremskreises, welcher mit einer zweiten Arbeitskammer verbunden ist, in welcher ein zweiter Arbeitsdruck ansteht,
h) ein zweiter Vorratsanschluss für wenigstens einen dritten Druckluftvorrat, welcher einem vom ersten Bremskreis und vom zweiten Bremskreis abweichenden Druckluftverbraucherkreis zugeordnet ist, wobei der zweite Vorratsanschluss mit einer zweiten Drucklufteingangskammer verbunden ist,
i) ein zweiter Steueranschluss, welcher mit einer zweiten Steuerkammer verbunden ist, zur Einsteuerung eines zweiten Steuerdrucks des zweiten Bremskreises in die zweite Steuerkammer,
j) ein zweiter, im Ventilblock beweglich geführter Relaiskolben, von welchem eine erste Wirkfläche von dem in der zweiten Arbeitskammer herrschenden zweiten Arbeitsdruck und von welchem eine zweite Wirkfläche von dem zweiten Steuerdruck in der zweiten Steuerkammer beaufschlagt ist,
k) ein zweites, ein zweites Ventilglied beinhaltendes Doppelsitzventil als kombiniertes Einlass-/Auslassventil, über dessen zweites Einlassventil die zweite Arbeitskammer mit der zweiten Drucklufteingangskammer und über dessen zweites Auslassventil die zweite Arbeitskammer mit der ersten Arbeitskammer verbindbar ist,
I) wobei die Relaisventileinrichtung weiterhin so ausgebildet ist, dass
   I1) bei entlüfteter erster Steuerkammer und entlüfteter zweiter Steuerkammer zum Herstellen des Zustands "Fahren" das erste Auslassventil die erste Arbeitskammer mit der Entlüftung und das zweite Auslassventil die zweiten Arbeitskammer mit der ersten Arbeitskammer verbindet, wobei das erste Einlassventil und das zweite Einlassventil geschlossen sind,
   I2) bei belüfteter erster Steuerkammer und belüfteter zweiter Steuerkammer zum Herstellen des Zustands "Bremsen" das erste Einlassventil die erste Arbeitskammer mit der ersten Drucklufteingangskammer und das zweite Auslassventil die zweite Arbeitskammer mit der ersten Arbeitskammer verbindet, wobei das erste Auslassventil und das zweite Einlassventil geschlossen sind,
   I3) bei einem Ausfall des ersten Bremskreises bedingt durch einen Druckverlust des ersten Druckluftvorrats bei dann entlüfteter erster Steuerkammer und belüfteter zweiter Steuerkammer zum Herstellen des Zustands "Bremsen" das erste Auslassventil die ersten Arbeitskammer mit der Entlüftung und das zweite Einlassventil die zweite Arbeitskammer mit der zweiten Drucklufteingangskammer verbindet, wobei das erste Einlassventil und das zweite Auslassventil geschlossen sind,
   I4) bei einem Ausfall der Funktion des ersten Bremszylinders bedingt durch einen Druckluftverlust zwischen dem ersten Arbeitsanschluss und dem ersten Bremszylinder oder bei einem Ausfall der Funktion des zweiten Bremszylinders bedingt durch einen Druckluftverlust zwischen dem zweiten Arbeitsanschluss und dem zweiten Bremszylinder bei belüfteter erster Steuerkammer und belüfteter zweiter Steuerkammer zum Herstellen des Zustands "Bremsen" das erste Einlassventil die erste Arbeitskammer mit der ersten Drucklufteingangskammer und das zweite Einlassventil die zweite Arbeitskammer mit der zweiten Drucklufteingangskammer verbindet, wobei das erste Auslassventil und das zweite Auslassventil geschlossen sind.

Mit anderen Worten wird eine bekannte Relaisventileinrichtung z.B. als Relaisteil eines 1-Kanal-Druckregelmoduls, welches den Bremsdruck an Bremszylindern eines Bremskreises bzw. einer Achse, insbesondere einer Vorderachse regelt, um lediglich ein zweites Doppelsitzventil mit zweitem Ventilglied und zweitem Relaiskolben erweitert und diese Bauteile/Baugruppen in oder an demselben Ventilblock angeordnet bzw. ausgebildet, welcher aber im Übrigen unverändert bleibt. Dies spart Fertigungsaufwand und pneumatische Leitungen bzw. Verrohrungen.

Unter dem "Ventilblock der Relaisventileinrichtung" kann auch ein Gehäuse der Relaisventileinrichtung verstanden werden, in oder an dem die genannten Baugruppen/Bauteile angeordnet sind. In oder an diesem Gehäuse sind dann die genannten Baugruppen/Bauteile angeordnet.

Weil weiterhin die Relaisventileinrichtung so ausgebildet oder aufgebaut ist, dass einerseits ein Druckverlust in dem dem betreffenden Bremskreis zugeordneten Druckluftvorrat durch eine Druckluftversorgung aus dem dritten Druckluftvorrat kompensiert wird, und dass andererseits Leckagen in den Druckluftverbindungen zwischen den Arbeitsanschlüssen und den zugeordneten Bremszylindern durch die Funktion des von der Leckage nicht betroffenen Bremszylinders kompensiert wird, ist eine Bremsung mit dem verbleibenden Bremszylinder des Bremskreises bzw. der Achse sichergestellt.

Zudem ist auch Kreistrennung gewährleistet, weil der dritte Druckluftvorrat dem vom ersten Bremskreis und vom zweiten Bremskreis abweichenden Druckluftverbraucherkreis zugeordnet ist, beispielsweise einem Nebenverbraucherkreis. Sowohl ein versorgungsseitiger als auch ein arbeitsseitiger Druckluftverlust bzw. eine versorgungsseitige als auch eine arbeitsseitige Leckage in Bezug auf die Relaisventileinrichtung wird daher durch die erfindungsgemäße Relaisventileinrichtung automatisch und in einer einzigen Baueinheit kompensiert. Folglich eignet sich die Relaisventileinrichtung insbesondere zum Einsatz in Bremsdruckmodulatoren bzw. Druckregelmoduln an der Vorderachse von Fahrzeugen, welche aufgrund ihres Schwerpunkts, ihrer Lastverteilung, Ihres Radstands oder wegen anderer Gegebenheiten beim Bremsen zu einer starken Entlastung der Hinterachse neigen und bei denen infolgedessen ein Bremskraftverlust an der Vorderachse zu einer nicht mehr ausreichenden Verzögerung führen würde.

Es versteht sich im Folgenden, dass die Betrachtung der Relaisventileinrichtung stets von den Druckluftvorräten bzw. Vorratsanschlüssen hin zu den Arbeitsanschlüssen, d.h. von der Versorgungsseite zur Arbeitsseite hin erfolgt. Ist daher die Rede von nachfolgenden Komponenten, so sind stets die in der Relaisventileinrichtung schaltungstechnisch näher an den Arbeitsanschlüssen angeordneten Komponenten gemeint. Ebenso verhält es sich mit Worten "versorgungsseitig" und "arbeitsseitig", wobei mit "versorgungsseitig". "Steuerseitig" beschreibt die Zugehörigkeit zu einem eventuell vorhandenen Steueranschluss einer Komponente. Ferner versteht sich, dass der Begriff "graduell" im Zusammenhang mit einem Druckniveau als zwischen einem maximalen Vorratsdruck und einem minimalen Umgebungsdruck liegend zu sehen ist. Als Ventileinrichtung ist eine sämtliche Ventile sowie sämtliche zwischen den Ventilen liegende Leitungselemente umfassende Einrichtung zu verstehen.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist der erste Bremskreis ein Vorderachs-Betriebsbremskreis und der zweite Bremskreis ein Hinterachs-Betriebsbremskreis. Daher bleibt bei dynamischer Achslastverlagerung beim Bremsen dann zumindest ein Bremszylinder an der Vorderachse funktionstüchtig, wenn einer der oben genannten Fehler auftritt und kann die aufgrund der Entlastung der Hinterachse relativ geringen Bremskräfte durch Bremskräfte an der Vorderachse kompensieren.

Besonders bevorzugt ist die erste Wirkfläche des zweiten Relaiskolbens größer als dessen zweite Wirkfläche. Damit wird die maximale Bremskraft des verbleibenden Bremszylinders im betreffenden Bremskreis oder an der betreffenden Achse begrenzt, um ein zu großes Giermoment beim Bremsen zu vermeiden.

Bevorzugt verbindet auch ein in dem Ventilblock ausgebildeter Verbindungskanal die erste Arbeitskammer mit dem zweiten Auslassventil des zweiten Doppelsitzventils und bei geöffnetem zweitem Auslassventil mit der zweiten Arbeitskammer.

Bevorzugt sind wenigstens das erste Doppelsitzventil, das erste Ventilglied, der erste Relaiskolben, das zweite Doppelsitzventil, das zweite Ventilglied und der zweite Relaiskolben in dem Ventilblock koaxial zueinander angeordnet. Dies erleichtert die Fertigung und spart weiter Bauraum.

Gemäß einer konstruktiven Weiterbildung ist das erste Ventilglied gegen einen ersten Einlassventilsitz des ersten Einlassventils durch erste Federmittel vorgespannt und der erste Relaiskolben hebt das Ventilglied gegen die Wirkung der ersten Federmittel vom ersten Einlassventilsitz ab, wenn die erste Steuerkammer belüftet ist.

Weiterhin kann an dem ersten Relaiskolben ein erster Auslassventilsitz des ersten Auslassventils ausgebildet sein, welcher bei belüfteter erster Steuerkammer gegen das erste Ventilglied dichtet.

Weiterbildend kann auch das zweite Ventilglied zusammen mit dem zweiten Relaiskolben im Ventilblock geführt und gegen einen am zweiten Relaiskolben ausgebildeten zweiten Einlassventilsitz des zweiten Einlassventils durch zweite, sich am zweiten Relaiskolben abstützende Federmittel vorgespannt sein.

Auch kann an dem Ventilblock ein zweiter Auslassventilsitz des zweiten Auslassventils ausgebildet sein, welcher mit dem zweiten Ventilglied zusammenwirkt.

Nicht zuletzt kann der zweite Relaiskolben am Ventilblock durch dritte Federmittel in eine das Ventilglied vom zweiten Auslassventilsitz abhebende Richtung vorgespannt sein.

Die Erfindung betrifft auch ein elektro-pneumatisches Druckregelmodul (Bremsdruckmodulator), welches außer einer oben beschriebenen Relaisventileinrichtung wenigstens eine Einlass-/Auslassmagnetventilkombination, wenigstens ein Backup-Magnetventil sowie wenigstens ein elektronisches, die Einlass-/Auslassmagnetventilkombination und das Backup-Magnetventil steuerndes Steuergerät aufweist.

Bei einem solchen Druckregelmodul ist der erste Steueranschluss der Relaisventileinrichtung sowohl von einem von der Einlass-/Auslassventilkombination ausgesteuerten Steuerdruck als auch von einem vom Backup-Magnetventil ausgesteuerten Steuerdruck beaufschlagbar.

Das Backup-Magnetventil des Druckregelmoduls kann dann eingangsseitig mit einem ersten, dem ersten Bremskreis zugeordneten Kanal eines elektro-pneumatischen Bremswertgebers und ausgangsseitig mit dem ersten Steueranschluss der Relaisventileinrichtung des Druckregelmoduls verbunden sein.

Das Druckregelmodul regelt den von ihm ausgesteuerten Bremsdruck bzw. die von ihm ausgesteuerten Bremsdrücke. Hierzu umfasst es weiterhin bevorzugt einen mit dem ersten Arbeitsanschluss der Relaisventileinrichtung in Verbindung stehenden Drucksensor, welcher ein den Ist-Bremsdruck am ersten Arbeitsanschluss repräsentierendes Signal in das elektronische Steuergerät einsteuert, welches daraufhin die Einlass/Auslassventilkombination ansteuert, um den Ist-Bremsdruck an einen Soll-Bremsdruck anzugleichen, welcher von einem elektro-pneumatischen Bremswertgeber, insbesondere von einem elektrischen Kanal eines Fußbremsmoduls in das elektronische Steuergerät eingesteuert wird.

Das Backup-Magnetventil, das elektronische Steuergerät und die Einlass-/Auslassmagnetventilkombination sind bevorzugt in einem Modulgehäuse angeordnet. Dieses Modulgehäuse kann an den Ventilblock der Relaisventileinrichtung angeflanscht sein oder der Ventilblock der Relaisventileinrichtung kann einen Teil des Modulgehäuses ausbilden oder in dem Modulgehäuse integriert sein.

Weiterhin betrifft die Erfindung auch eine elektro-pneumatische Kraftfahrzeugbremseinrichtung, insbesondere ein elektronisches Bremssystem (EBS) mit Bremsdruckregelung, mit einem ersten Bremskreis und einem zweiten Bremskreis umfassend wenigstens ein oben beschriebenes elektro-pneumatisches Druckregelmodul.

Weiterhin kann bei der Kraftfahrzeugbremseinrichtung der zweite Steueranschluss der Relaisventileinrichtung des Druckregelmoduls mit einem zweiten, dem zweiten Bremskreis zugeordneten Kanal des elektro-pneumatischen Bremswertgebers verbunden sein.

Gemäß einer Weiterbildung steuert ein elektrischer Kanal des elektro-pneumatischen Bremswertgebers einen Sollwert des Bremsdrucks repräsentierende elektrische Signale in das elektronische Steuergerät des Druckregelmoduls ein.

Bevorzugt ist bei der Kraftfahrzeugbremseinrichtung der zweite Vorratsanschluss der Relaisventileinrichtung des Druckregelmoduls mit einem dritten Druckluftvorrat verbunden, welcher einem vom ersten Bremskreis und vom zweiten Bremskreis abweichenden Druckluftverbraucherkreis zugeordnet ist.

Die Kraftfahrzeugbremseinrichtung kann auch so ausgestaltet sein, dass der erste Vorratsanschluss der Relaisventileinrichtung des Druckregelmoduls an einen ersten, dem ersten Bremskreis zugeordneten Druckluftvorrat, ein erster, einer ersten Fahrzeugseite zugeordneter Bremszylinder an den ersten Arbeitsanschluss der Relaisventileinrichtung des Druckregelmoduls und ein zweiter, einer zweiten Fahrzeugseite zugeordneter Bremszylinder an den zweiten Arbeitsanschluss der Relaisventileinrichtung des Druckregelmoduls mittelbar oder unmittelbar angeschlossen sind.

Schließlich betrifft die Erfindung auch ein Fahrzeug mit einer oben beschriebenen Kraftfahrzeugbremseinrichtung.

An einem solchen Fahrzeug sind der erste Bremszylinder und der zweite Bremszylinder bevorzugt an einer Achse, insbesondere an einer Vorderachse angeordnet.

Weitere die Erfindung verbessernde Maßnahmen werden nachstehend gemeinsam mit der Beschreibung eines Ausführungsbeispiels der Erfindung anhand der Zeichnung näher dargestellt.

In der ein Ausführungsbeispiel der Erfindung darstellenden Zeichnung zeigt
- Fig.2: einen schematischen Schaltplan einer elektro-pneumatischen Bremseinrichtung mit einem 1-Kanal-Druckregelmodul beinhaltend eine Relaisventileinrichtung, jeweils in bevorzugter Ausführungsform gemäß der Erfindung in der Stellung "Fahren";
- Fig.2A: eine schematische Querschnittsdarstellung der Relaisventileinrichtung der elektro-pneumatischen Bremseinrichtung von Fig.2 in bevorzugter Ausführungsform in der Stellung "Fahren";
- Fig.3: einen schematischen Schaltplan der intakten elektro-pneumatischen Bremseinrichtung von Fig.2 in einer Stellung "Bremsdruckaufbau";
- Fig.4: einen schematischen Schaltplan der intakten elektro-pneumatischen Bremseinrichtung von Fig.2 in einer Stellung "Bremsen";
- Fig.5: einen schematischen Schaltplan der einen Ausfall eines ersten Bremskreises aufweisenden elektro-pneumatischen Bremseinrichtung von Fig.2 in der Stellung "Bremsdruckaufbau";
- Fig.6: einen schematischen Schaltplan der einen Ausfall des ersten Bremskreises aufweisenden elektro-pneumatischen Bremseinrichtung von Fig.2 in der Stellung "Bremsen";
- Fig.7: einen schematischen Schaltplan der eine Leckage in einer zu einem ersten Bremszylinder einer Achse führenden Bremsleitung aufweisenden elektro-pneumatischen Bremseinrichtung von Fig.2 in der Stellung "Bremsdruckaufbau";
- Fig.8: einen schematischen Schaltplan der die Leckage in der zu dem ersten Bremszylinder der Achse führenden Bremsleitung aufweisenden elektropneumatischen Bremseinrichtung von Fig.2 in der Stellung "Bremsen";
- Fig.9: einen schematischen Schaltplan der eine Leckage in einer zu einem zweiten Bremszylinder der Achse führenden Bremsleitung aufweisenden elektro-pneumatischen Bremseinrichtung von Fig.2 in der Stellung "Bremsdruckaufbau";
- Fig.10: einen schematischen Schaltplan der die Leckage in der zu dem zweiten Bremszylinder führenden Bremsleitung aufweisenden elektropneumatischen Bremseinrichtung von Fig.2 in der Stellung "Bremsen".

### Beschreibung des Ausführungsbeispiels

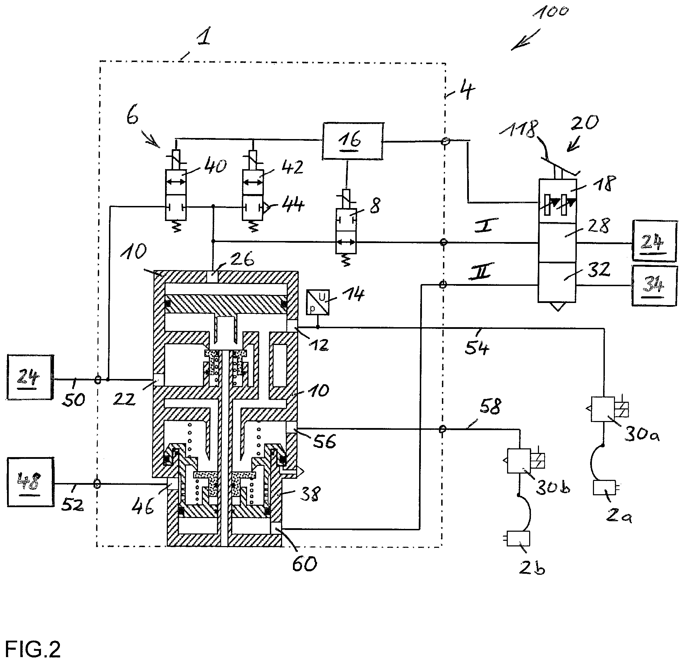

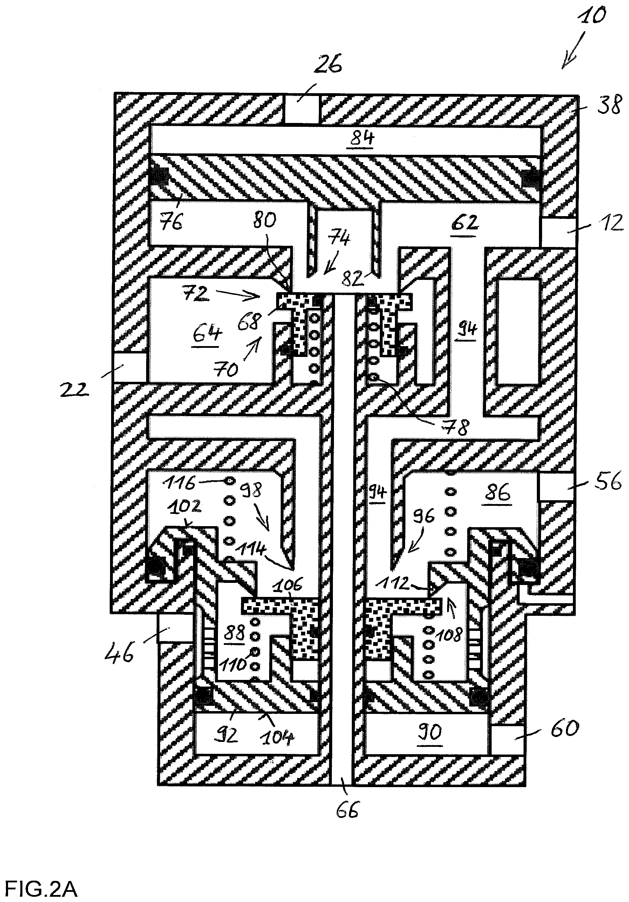

In **Fig.2** ist ein schematischer Schaltplan einer elektro-pneumatischen Fahrzeugbremseinrichtung 100 eines Fahrzeugs, insbesondere eines für einen Anhängerbetrieb vorgesehenen Zugfahrzeugs, mit einem 1-Kanal-Druckregelmodul 1 beinhaltend eine Relaisventileinrichtung 10, jeweils in bevorzugter Ausführungsform in einer Stellung "Fahren" dargestellt. Die elektro-pneumatische Bremseinrichtung 100 ist hier bevorzugt ein elektronisch geregeltes Bremssystem (EBS) mit einem ersten Bremskreis I, der beispielsweise ein Vorderachs-Bremskreis des Zugfahrzeugs ist und mit einem zweiten Bremskreis II, der beispielsweise ein Hinterachs-Bremskreis des Zugfahrzeugs ist.

Von dieser elektro-pneumatischen Betriebsbremseinrichtung 100 ist aus Maßstabsgründen hier lediglich das z.B. einkanalige Druckregelmodul 1 des Vorderachs-Bremskreises dargestellt, während ein beispielsweise zweikanaliges Druckregelmodul für den Hinterachs-Bremskreis nicht gezeigt ist.

Das Druckregelmodul 1 des Vorderachs-Bremskreises ist bevorzugt den beiden Rädern der Vorderachse zugeordnet und regelt den pneumatischen Bremsdruck in einem ersten pneumatischen Bremszylinder 2a der rechten Fahrzeugseite und in einem zweiten pneumatischen Bremszylinder 2b der linken Fahrzeugseite jeweils an der Vorderachse innerhalb des ersten Bremskreises I in paralleler Weise.

Ein Fußbremsmodul 20 weist einen ersten, dem Vorderachs-Bremskreis zugeordneten pneumatischen Kanal 28 sowie einen zweiten, dem Hinterachs-Bremskreis zugeordneten pneumatischen Kanal 32 sowie einen elektrischen Kanal 18 auf. Der erste, dem Vorderachs-Bremskreis zugeordnete pneumatische Kanal 28 wird von einem ersten Druckluftvorrat 24 mit Druckluft versorgt, der dem Vorderachs-Bremskreis zugeordnet ist und der zweite, dem Hinterachs-Bremskreis zugeordnete pneumatische Kanal 32 wird von einem zweiten Druckluftvorrat 34 mit Druckluft versorgt, der dem Hinterachs-Bremskreis zugeordnet ist. Weiterhin werden die pneumatischen Kanäle 28, 32 und der elektrische Kanal 18 des Fußbremsmoduls 20 von einer die Fußbremsplatte betätigt.

Das Druckregelmodul 1 ist in einem Modulgehäuse 4 untergebracht, welches in Fig.2 strichpunktiert dargestellt ist und in welches neben einem elektronischen Steuergerät 16, einer elektromagnetischen Einlass-/Auslassventilkombination 6, einem Backup-Magnetventil 8 und einem Drucksensor 14 auch eine Relaisventileinrichtung 10 integriert ist. Die Relaisventileinrichtung 10 ist in einem Ventilblock 38 ausgebildet. Vorzugsweise ist dieser Ventilblock 38 daher in dem Modulgehäuse 4 integriert, wobei das Modulgehäuse 4 wiederum durch einen Ventilblock gebildet werden kann. Alternativ könnte der Ventilblock 38 der Relaisventileinrichtung 10 auch an das Modulgehäuse 4 angeflanscht sein.

Das Druckregelmodul 1 regelt den von ihm an einem ersten Arbeitsanschluss 12 der Relaisventileinrichtung 10 ausgesteuerten Bremsdruck. Hierzu ist der Drucksensor 14 an den ersten Arbeitsanschluss 12 der Relaisventileinrichtung 10 angeschlossen und steuert ein den Ist-Bremsdruck am ersten Arbeitsanschluss 12 repräsentierendes Signal in das elektronische Steuergerät 16 ein, welches daraufhin die Einlass/Auslassventilkombination 6 ansteuert, um den Ist-Bremsdruck an einen Soll-Bremsdruck anzugleichen, welcher von dem elektrischen Kanal 18 des Fußbremsmoduls 20 in das elektronische Steuergerät 16 eingesteuert wird.

Die Einlass/Auslassventilkombination 6 beinhaltet hier beispielsweise ein Einlassventil 40, welches eingangsseitig mit dem ersten, dem Vorderachs-Bremskreis I zugeordneten Druckluftvorrat 24 und ausgangsseitig mit dem ersten Steueranschluss 26 der Relaisventileinrichtung 10 verbunden ist sowie weiterhin ein Auslassventil 42, welches eingangsseitig mit dem ersten Steueranschluss 26 der Relaisventileinrichtung 10 und ausgangsseitig mit einer Entlüftung 44 verbunden ist. Aus Anschaulichkeitsgründen ist der erste Druckluftvorrat 24 in Fig.2 doppelt gezeichnet, in Wirklichkeit bevorzugt aber nur einmal vorhanden.

Einlassventil 40 und Auslassventil 42 sind beispielsweise jeweils als 2/2-Wege-Magnetventil ausgebildet, welches unbestromt in eine Sperrstellung und bestromt in die Durchlassstellung geschaltet ist. Alternativ könnte die Einlass-/Auslassmagnetventilkombination 6 jegliche andere Magnetventile beinhalten, welche eine Be- und Entlüftung des ersten Steueranschlusses 26 der Relaisventileinrichtung 10 gestatten.

Der erste Steueranschluss 26 der Relaisventileinrichtung 10 ist dann sowohl von einem von der Einlass-/Auslassventilkombination 6 ausgesteuerten Steuerdruck als auch von einem vom Backup-Magnetventil 8 ausgesteuerten Steuerdruck beaufschlagbar. Das beispielsweise als 2/2-Wege-Magnetventil ausgeführte Backup-Magnetventil 8 des Druckregelmoduls 1 ist eingangsseitig mit dem ersten pneumatischen, dem Vorderachs-Bremskreis zugeordneten Kanal 28 des Fußbremsmoduls 20 und ausgangsseitig mit dem ersten Steueranschluss 26 der Relaisventileinrichtung 10 des Druckregelmoduls 1 verbunden. Unbestromt nimmt das Backup-Magnetventil 8 die Durchlassstellung und bestromt die Sperrstellung ein.

Das Backup-Magnetventil 8 ist bei intaktem elektro-pneumatischem Vorderachs-Bremskreis I bestromt in seine Sperrstellung geschaltet und kann dann den im ersten Kanal 28 des Vorderachs-Bremskreises I anstehenden ersten Steuerdruck nicht an den ersten Steueranschluss 26 durchsteuern. Bei einem Ausfall des elektro-pneumatischen Vorderachs-Bremskreises I, beispielsweise durch Stromausfall, einen Kontaktfehler oder einen Fehler im elektronischen Steuergerät 16 schaltet das Backup-Magnetventil 8 unbestromt in seine Durchlassstellung, woraufhin der in dem ersten Kanal 28 des Vorderachs-Bremskreises I anstehende erste Steuerdruck an den ersten Steueranschluss 26 der Relaisventileinrichtung 10 als Backup-Steuerdruck durchgesteuert wird.

Ein erster Vorratsanschluss 22 der Relaisventileinrichtung 10 ist an den ersten Druckluftvorrat 24 des Vorderachs-Bremskreises I und ein zweiter Vorratsanschluss 46 der Relaisventileinrichtung 10 an einen dritten Druckluftvorrat 48 angeschlossen, welcher in Bezug auf den ersten Druckluftvorrat 24 und den zweiten Druckluftvorrat 34 einen separaten Druckluftvorrat darstellt, welcher beispielsweise einem Neben-Druckluftverbraucherkreis des Zugfahrzeugs zugeordnet ist, wie beispielsweise einem Luftfederungskreis. Eine erste Vorratsleitung 50 verbindet den ersten Vorratsanschluss 22 mit dem ersten Druckluftvorrat 24 und eine zweite Vorratsleitung 52 den zweiten Vorratsanschluss 46 mit dem dritten Druckluftvorrat 48.

Ein erster Arbeitsanschluss 12 der Relaisventileinrichtung 10 ist über eine erste Bremsleitung 54 und einem optional in dieser angeordneten ersten ABS-Drucksteuerventil 30a an den ersten Bremszylinder 2a der rechten Fahrzeugseite angeschlossen. Analog ist ein zweiter Arbeitsanschluss 56 der Relaisventileinrichtung 10 über eine zweite Bremsleitung 58 und einem optional in dieser angeordneten zweiten ABS-Drucksteuerventil 2b an den zweiten Bremszylinder 2b der linken Fahrzeugseite angeschlossen.

Die Relaisventileinrichtung 10 hat Luftmengen verstärkende Eigenschaften als ein an dem ersten Steueranschluss 26 und an einem zweiten Steueranschluss 60 anstehender Steuerdruck einen hinsichtlich des Luftvolumens größeres Arbeitsvolumen an den ersten Arbeitsanschluss 12 und den zweiten Arbeitsanschluss 56 steuert.

**Fig.2A** zeigt die Relaisventileinrichtung 10 in vergrößerter Darstellung. Der erste Arbeitsanschluss 12 ist mit einer ersten Arbeitskammer 62 der Relaisventileinrichtung 10 verbunden, in welcher ein erster Arbeitsdruck ansteht. Der erste Vorratsanschluss 22 ist mit einer ersten Drucklufteingangskammer 64 der Relaisventileinrichtung 10 verbunden. Weiterhin weist die erste Relaisventileinrichtung 10 eine eigene Entlüftung 66 auf die mit der Atmosphäre verbunden ist. Darüber hinaus umfasst die Relaisventileinrichtung 10 ein erstes, ein erstes Ventilglied 68 beinhaltendes Doppelsitzventil 70 als kombiniertes Einlass-/Auslassventil, über dessen erstes Einlassventil 72 die erste Arbeitskammer 62 mit der ersten Drucklufteingangskammer 64 und über dessen erstes Auslassventil 74 die erste Arbeitskammer 62 mit der Entlüftung 66 verbindbar ist. Weiterhin ist in der Relaisventileinrichtung 10 ein erster, im Ventilblock 38 beweglich geführter Relaiskolben 76 vorhanden, der das erste Doppelsitzventil 70 betätigt. Das erste Ventilglied 68 ist durch erste Federmittel 78 gegen einen ersten Einlassventilsitz 80 des ersten Einlassventils 72 vorgespannt, der am Ventilblock 38 ausgebildet ist. Das erste Ventilglied 68 bildet zusammen mit dem ersten Einlassventilsitz 80 das erste Einlassventil 72 des ersten Doppelsitzventils 70 aus. An dem ersten Relaiskolben 76 ist wiederum ein erster Auslassventilsitz 82 des ersten Auslassventils 74 ausgebildet. Dieser erste Auslassventilsitz 82 bildet zusammen mit dem ersten Ventilkörper 68 das erste Auslassventil 74 des ersten Doppelsitzventils 70.

Der erste Steueranschluss 26 ist mit einer ersten Steuerkammer 84 verbunden, zur Einsteuerung eines ersten Steuerdrucks des Vorderachs-Bremskreises I in die erste Steuerkammer 84. Die erste Steuerkammer 84 wird von dem Ventilblock 38 und dem ersten Relaiskolben 76 begrenzt.

Der zweite Arbeitsanschluss 56 ist mit einer zweiten Arbeitskammer 86 verbunden, in welcher ein zweiter Arbeitsdruck ansteht. Weiterhin ist der zweite Vorratsanschluss 46 mit einer zweiten Drucklufteingangskammer 88 verbunden. Der zweite Steueranschluss 60 der Relaisventileinrichtung 10, welcher mit einer zweiten Steuerkammer 90 verbunden ist, dient zur Einsteuerung eines zweiten Steuerdrucks des Hinterachs-Bremskreises II in die zweite Steuerkammer 90. Die zweite Steuerkammer 90 wird von dem Ventilblock 38 und einem zweiten, im Ventilblock 38 beweglich geführten Relaiskolben 92 begrenzt.

Ein in dem Ventilblock 38 ausgebildeter Verbindungskanal 94 verbindet die erste Arbeitskammer 62 stets einem zweiten Auslassventil 96 eines zweiten Doppelsitzventils 98 und bei geöffnetem zweiten Auslassventil 96 mit der zweiten Arbeitskammer 86.

Von dem zweiten Relaiskolben 92 wird eine erste Wirkfläche 102 von dem in der zweiten Arbeitskammer 86 herrschenden zweiten Arbeitsdruck und eine zweite Wirkfläche 104 von dem zweiten Steuerdruck in der zweiten Steuerkammer 90 beaufschlagt. Die erste Wirkfläche 102 des zweiten Relaiskolbens 92, welche bei geöffnetem zweiten Auslassventil 96 von dem ersten Arbeitsdruck in der ersten Arbeitskammer 62 belastet ist, ist vorzugsweise größer als die zweite Wirkfläche 104, welche der zweiten Steuerkammer 90 zugewandt ist.

Darüber hinaus ist das zweite, ein zweites Ventilglied 106 beinhaltende Doppelsitzventil 96 als kombiniertes Einlass-/Auslassventil ausgebildet, über dessen zweites Einlassventil 108 die zweite Arbeitskammer 86 mit der zweiten Drucklufteingangskammer 88 und über dessen zweites Auslassventil 96 die zweite Arbeitskammer 86 mit der ersten Arbeitskammer 62 verbindbar ist. Das zweite Ventilglied 106 ist durch zweite Federmittel 110 gegen einen zweiten, am Ventilblock 38 ausgebildeten zweiten Einlassventilsitz 112 vorgespannt. Das zweite Ventilglied 106 bildet zusammen mit dem zweiten Einlassventilsitz 112 das zweite Einlassventil 108 des zweiten Doppelsitzventils 98 aus. An dem Ventilblock 38 ist ein zweiter Auslassventilsitz 114 des zweiten Auslassventils 96 ausgebildet. Dieser zweite Auslassventilsitz 114 bildet zusammen mit dem zweiten Ventilkörper 106 das zweite Auslassventil 96 des zweiten Doppelsitzventils 98. Der zweite Relaiskolben 92 ist durch dritte Federmittel 116 gegen das zweite Ventilglied 106 in eine das zweite Einlassventil 112 schließende Richtung vorgespannt.

Bevorzugt das erste Doppelsitzventil 70, das erste Ventilglied 68, der erste Relaiskolben 76, das zweite Doppelsitzventil 98, das zweite Ventilglied 106 und der zweite Relaiskolben 92 in dem Ventilblock 38 koaxial angeordnet.

Vor diesem Hintergrund ist die Funktionsweise der elektro-pneumatischen Fahrzeugbremseinrichtung 100 wie folgt:
Zum Herstellen des in Fig.2 und Fig.2A dargestellten Zustands "Fahren" empfängt das elektronische Steuergerät 16 vom elektrischen Kanal 18 des Fußbremsmoduls 20 (Fußbremsplatte 118 unbetätigt) ein entsprechendes elektrisches Signal, woraufhin dieses die Einlass-/Auslassventilkombination 6 steuert, um das das Einlassventil 40 in Sperrstellung zu schalten. Damit wird die erste Steuerkammer 84 entlüftet. Gleichzeitig sorgt auch die in Fahrstellung befindliche und damit unbetätigte Fußbremsplatte 118 des Fußbremsmoduls 20 dafür, dass der zweite Kanal 32 des Fußbremsmoduls 20 und damit auch der zweite Steueranschluss 60 und die zweite Steuerkammer 90 entlüftet sind.

Bei entlüfteter erster Steuerkammer 84 befindet sich der erste Relaiskolben 76 in einer Schwebestellung, in welcher der erste Auslassventilsitz 82 vom ersten Ventilkörper 68 abgehoben und folglich das erste Auslassventil 74 geöffnet ist. Dadurch verbindet das erste Auslassventil 74 den ersten Arbeitsanschluss 12 mit der Entlüftung 66 der Relaisventileinrichtung 10, so dass der erste Bremszylinder 2a der rechten Fahrzeugseite entlüftet ist. Hingegen ist das erste Einlassventil 72 durch die Wirkung der ersten Federmittel 78 geschlossen.

Bei entlüfteter zweiter Steuerkammer 90 vermag der dort herrschende niedrige zweite Steuerdruck nicht den zweiten Relaiskolben 92 gegen die Wirkung der dritten Federmittel 116 vom zweiten Ventilglied 106 abzuheben, wodurch das zweite Einlassventil 108 geschlossen bleibt. Hingegen bewirken die Federkräfte der dritten Federmittel 116, dass der zweite Relaiskolben 92 vom zweiten Auslassventilsitz 114 beabstandet ist und somit das zweite Auslassventil 96 geöffnet ist. Das geöffnete zweite Auslassventil 96 verbindet dann die zweite Arbeitskammer 86 mit der ersten Arbeitskammer 62. Da die erste Arbeitskammer 62 entlüftet ist (siehe oben), sind auch die zweite Arbeitskammer 86 und damit der zweite Arbeitsanschluss 56 und die zweite Bremszylinder 2b an der zweiten Fahrzeugseite entlüftet.

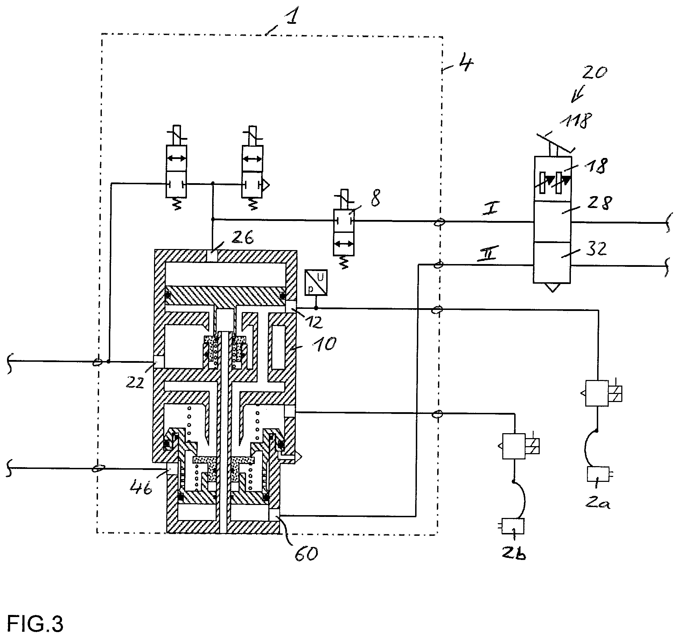

Zum Bremsdruckaufbau wird gemäß **Fig.3** die Fußbremsplatte 118 betätigt wodurch in beiden pneumatischen Kanälen 28, 32 des Fußbremsmoduls 20 je ein pneumatischer Steuerdruck erzeugt wird, in dem ersten pneumatischen Kanal 28 der erste Steuerdruck und in dem zweiten pneumatischen Kanal 32 der zweite Steuerdruck. Der erste Steuerdruck wird aber von dem unbestromt und damit in Sperrstellung gehaltenen Backup-Magnetventil 8 gegenüber dem ersten Steueranschluss 26 zurückgehalten.

Gleichzeitig wird ein der Betätigung der Fußbremsplatte 118 entsprechendes elektrisches Steuersignal in dem elektrischen Kanal 18 des Fußbremsmoduls 20 erzeugt und in das elektronische Steuergerät 16 des Druckregelmoduls 1 eingesteuert. Dieses bestromt dann das elektromagnetische Einlassventil 40, woraufhin dieses in Durchlassstellung schaltet und einen ersten Steuerdruck in den ersten Steueranschluss 26 der Relaisventileinrichtung 10 einsteuert, um die erste Steuerkammer 84 zu belüften (Fig.2A).

Der zweite Steuerdruck in dem zweiten Kanal 32 bewirkt, dass der zweite Steueranschluss 60 der Relaisventileinrichtung 10 und damit die zweite Steuerkammer 90 ebenfalls belüftet wird.

Bei belüfteter erster Steuerkammer 84 wird der erste Relaiskolben 76 mit dem ersten Auslassventilsitz 82 gegen den ersten Ventilkörper 68 gedrängt, wodurch das erste Auslassventil 74 schließt. Weiterhin wird das erste Ventilglied 68 vom ersten Einlassventilsitz 80 weg gedrängt, so dass das erste Einlassventil 72 öffnet. Das geöffnete erste Einlassventil 72 verbindet dann die erste Arbeitskammer 62 mit der ersten Drucklufteingangskammer 64, wodurch der erste Bremszylinder 2a an der rechten Fahrzeugseite belüftet und damit in Zuspannstellung überführt wird.

Der in der ersten Arbeitskammer 62 anstehende erste Arbeitsdruck wirkt über den internen Verbindungskanal 94 im Ventilblock 38 auch auf wenigstens eine Teilfläche des zweiten Ventilglieds 106 sowie auf die erste Wirkfläche 102 des zweiten Relaiskolbens 92, wie aus Fig.2A hervorgeht. Dadurch und durch die Federkräfte der dritten Federmittel 116 entsteht eine Kraft auf den zweiten Relaiskolben 92, welche größer ist als eine Kraft, welche von dem zweiten Steuerdruck in der zweiten Steuerkammer 90 herrührt. Dadurch werden der zweite Relaiskolben 92 und damit auch das mit diesem mit geführte zweite Ventilglied 106 von dem zweiten Auslassventilsitz 114 weg gedrängt, so dass das zweite Auslassventil 96 weiterhin geöffnet bleibt. Damit bleibt auch die erste Wirkfläche 102 des zweiten Relaiskolbens 92 von dem ersten Arbeitsdruck in der ersten Arbeitskammer 62 belastet und kann damit auch in der zweiten Arbeitskammer 86 und in dem zweiten Bremszylinder 2b der linken Fahrzeugseite anstehen, um diesen zuzuspannen. Indes bleibt das zweite Einlassventil 108 bedingt durch die Federkräfte der zweiten Federmittel geschlossen, wodurch keine Druckluft von dem dritten Druckluftvorrat 48 über die zweite Drucklufteingangskammer 88 in die zweite Arbeitskammer 86 vordringen kann. Der dritte Druckluftvorrat 48 ist daher bei intakter elektro-pneumatischer Fahrzeugbremseinrichtung 100 im Hinblick auf eine Betätigung der beiden Bremskreise I und II wirkungslos.

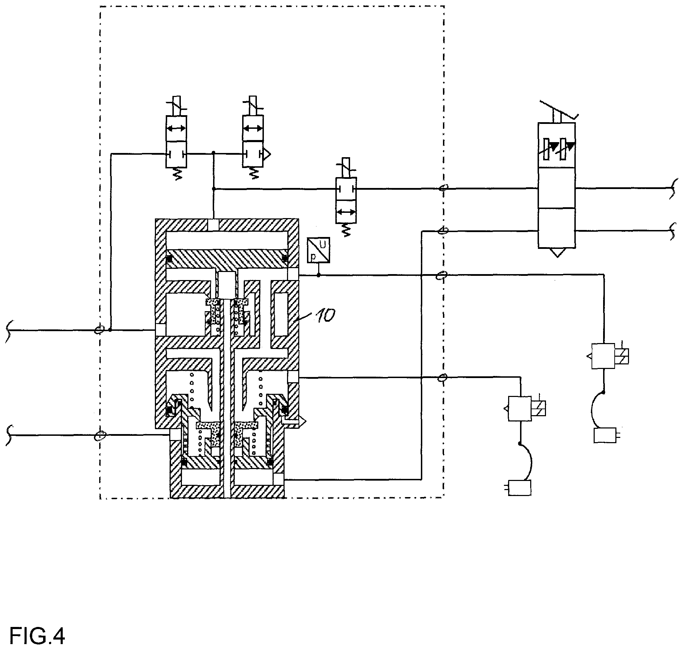

**Fig.4** zeigt dann die Abschlussstellung der Relaisventileinrichtung 10 im Zustand Bremsen bei intakter elektro-pneumatischer Fahrzeugbremseinrichtung 100.

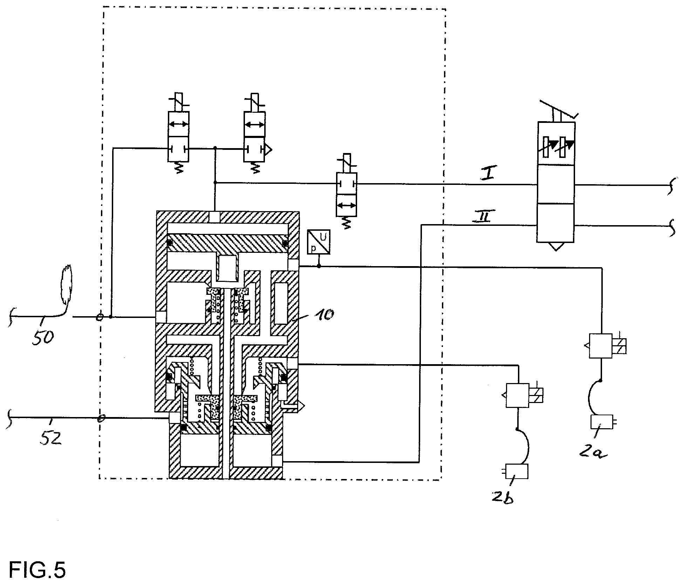

**Fig.5** zeigt den Bremsdruckaufbau bei einem Ausfall des Vorderachs-Bremskreises I bedingt durch einen Druckverlust des ersten Druckluftvorrats, welcher beispielsweise durch eine Leckage in der ersten Vorratsleitung 50 hervorgerufen ist. Dann ist die erste Steuerkammer 84 entlüftet, während die zweite Steuerkammer 90 weiterhin belüftet bleibt, weil der dort anstehende zweite Steuerdruck von dem zweiten, intakten Druckluftvorrat 34 abgeleitet wird (Fig.2A).

Die entlüftete erste Steuerkammer 84 bedingt, dass der erste Relaiskolben 68 und damit der erste Auslassventilsitz 82 vom ersten Ventilglied 68 abgehoben und damit das erste Auslassventil 74 geöffnet wird. Indes bleibt das erste Einlassventil 72 infolge der Wirkung der ersten Federmittel 78 geschlossen. Durch das geöffnete erste Auslassventil 74 wird die erste Arbeitskammer 62 mit der Entlüftung 66 der Relaisventileinrichtung 10 verbunden und damit die erste Arbeitskammer 62 entlüftet. Dadurch kann der erste Bremszylinder 2a an der rechten Fahrzeugseite nicht zugespannt werden.

Hingegen wird bewirkt die Belüftung der zweiten Steuerkammer 90 zum einen, dass der zweite Relaiskolben 92 und damit das mit ihm geführte zweite Ventilglied 106 gegen den zweiten Auslassventilsitz 114 dichtend gedrängt wird, wodurch das zweite Auslassventil 96 geschlossen wird. Der dann infolge der Entlüftung der ersten Arbeitskammer 62 niedrige erste Arbeitsdruck kann dann nicht in die zweite Arbeitskammer 86 gelangen. Zum andern wird das zweite Ventilglied 106 vom zweiten Einlassventilsitz 112 abgehoben, so dass das zweite Einlassventil 108 öffnet und dann Druckluft aus dem dritten Druckluftvorrat 48 über die zweite Vorratsleitung 52 und die zweite Drucklufteingangskammer 88 in die zweite Arbeitskammer 86 zum Zuspannen des zweiten Bremszylinders 2b an der linken Fahrzeugseite gelangen kann. Die an diesem zweiten Bremszylinder 2b erzeugte Bremskraft wirkt dann zusammen mit den an der Hinterachse im intakten zweiten Bremskreis II erzeugten Bremskräften, um das Fahrzeug abzubremsen. Das erste Einlassventil 72 und das zweite Auslassventil 96 bleiben dabei geschlossen.

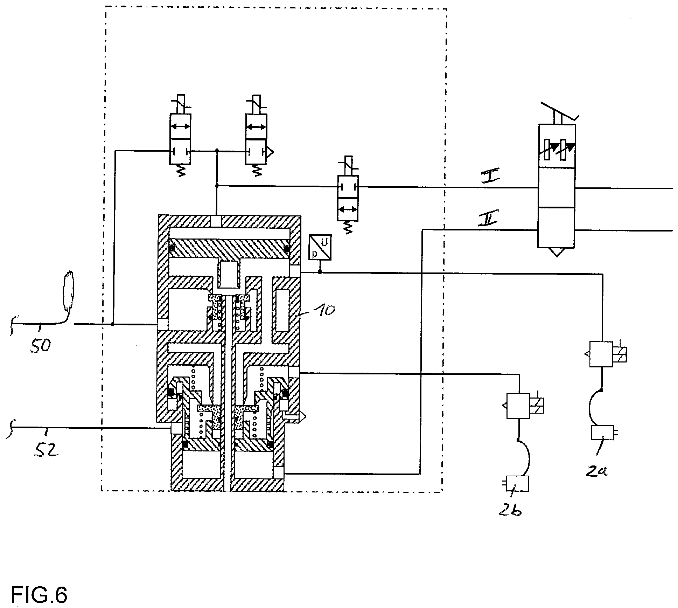

**Fig.6** zeigt dann die Abschlussstellung der Relaisventileinrichtung 10 im Zustand Bremsen bei einem Ausfall der Druckluftversorgung des Vorderachs-Bremskreises I durch den ersten Druckluftvorrat 24.

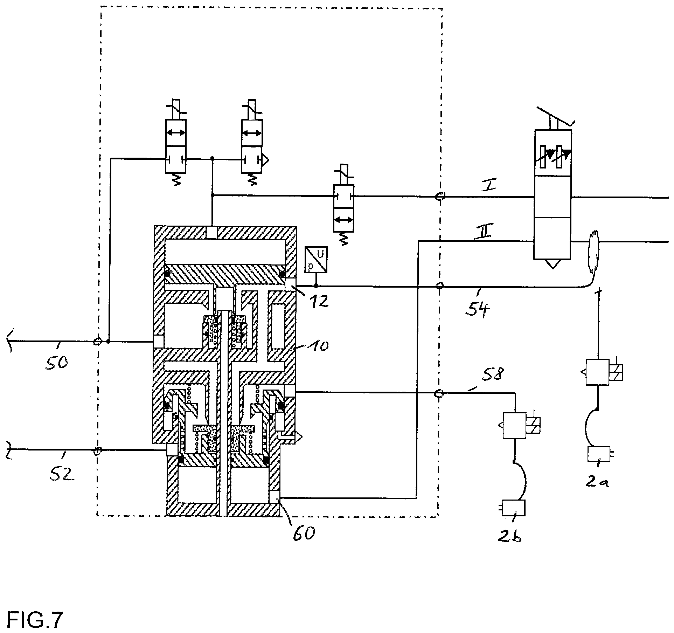

**Fig.7** zeigt den Bremsdruckaufbau bei einem Ausfall der Funktion des ersten Bremszylinders 2a der rechten Fahrzeugseite bedingt durch eine Leckage in der ersten Bremsleitung 54 zwischen dem ersten Arbeitsanschluss 12 und dem ersten Bremszylinder 2a. Dabei sind sowohl die erste Steuerkammer 84 als auch die zweite Steuerkammer 90 belüftet, weil steuerseitig kein Fehler vorliegt. Folglich kann das erste Einlassventil 72 die erste Arbeitskammer 62 mit der ersten Drucklufteingangskammer 64 und das zweite Einlassventil 108 die zweite Arbeitskammer 86 mit der zweiten Drucklufteingangskammer 88 verbinden und das erste Auslassventil 74 und das zweite Auslassventil 96 sind geschlossen. Aufgrund des dann niedrigen ersten Arbeitsdrucks kann der erste Bremszylinder 2a der rechten Fahrzeugseite nicht zuspannen.

Das zweite Auslassventil 96 wird geschlossen, weil der in der ersten Arbeitskammer 62 anstehende erste Arbeitsdruck infolge der Leckage in der ersten Bremsleitung 54 niedrig ist und deshalb die entsprechende Kraft auf die erste Wirkfläche 102 des zweiten Relaiskolbens 106 auch im Zusammenwirken mit der Kraft der dritten Federmittel 116 klein gegenüber der Gegenkraft ist, welche infolge des zweiten Steuerdrucks auf die zweite Wirkfläche 104 des zweiten Relaiskolbens 92 wirkt. Folglich kann der niedrige erste Arbeitsdruck dann nicht in der zweiten Arbeitskammer 86 anstehen, welche aber über das geöffnete zweite Einlassventil 108 von Druckluft aus dem dritten Druckluftvorrat 48 versorgt wird, um den zweiten Bremszylinder 2b an der linken Fahrzeugseite zuzuspannen.

Die an diesem zweiten Bremszylinder 2b erzeugte Bremskraft wirkt dann zusammen mit den an der Hinterachse im intakten zweiten Bremskreis II erzeugten Bremskräften, um das Fahrzeug abzubremsen.

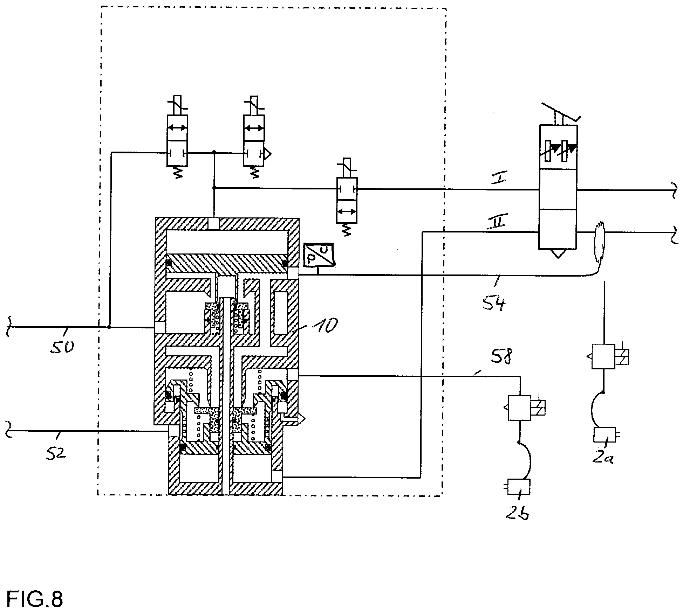

**Fig.8** zeigt dann die Abschlussstellung der Relaisventileinrichtung 10 im Zustand Bremsen bei einem Ausfall der Funktion des ersten Bremszylinders 2a der rechten Fahrzeugseite bedingt durch einen Druckluftverlust in der ersten Bremsleitung 54.

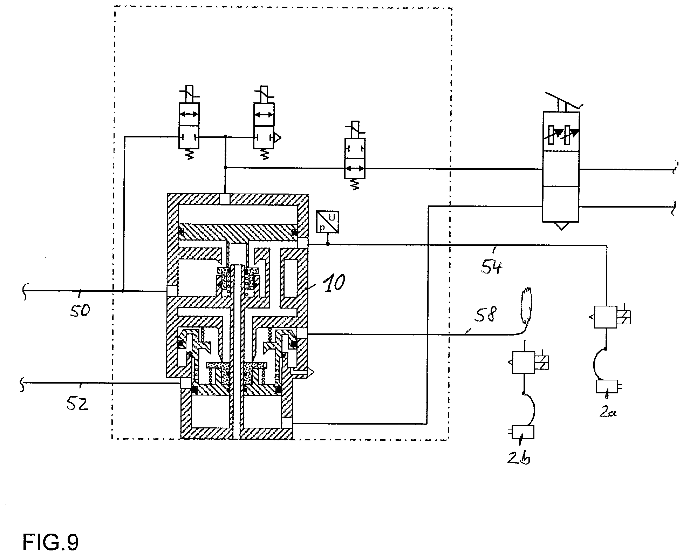

**Fig.9** zeigt den Bremsdruckaufbau bei einem Ausfall der Funktion des zweiten Bremszylinders 2b der linken Fahrzeugseite bedingt durch eine Leckage in der zweiten Bremsleitung 58 zwischen dem zweiten Arbeitsanschluss 56 und dem zweiten Bremszylinder 2b. Dabei sind sowohl die erste Steuerkammer 84 als auch die zweite Steuerkammer 90 belüftet, weil steuerseitig kein Fehler vorliegt. Folglich kann der erste Relaiskolben 76 das erste Einlassventil 72 öffnen und dadurch die erste Arbeitskammer 62 mit der ersten Drucklufteingangskammer 64 verbinden, so dass der erste Bremszylinder 2a zuspannen kann. Das erste Auslassventil bleibt indes geschlossen.

Aufgrund des niedrigen zweiten Arbeitsdrucks kann der zweite Bremszylinder 2b der linken Fahrzeugseite nicht zuspannen.

Der aufgrund der Leckage niedrige zweite Arbeitsdruck an der ersten Wirkfläche 102 des zweiten Relaiskolbens 106 sowie die Federkräfte der dritten Federmittel 116 werden von den Druckkräften aus dem zweiten Steuerdruck in der zweiten Steuerkammer 90 überspielt, so dass das zweite Auslassventil 96 geschlossen und der über den Verbindungskanal 94 herangeführte hohe erste Arbeitsdruck nicht über das zweite Auslassventil 96 entweichen kann. Infolge des zweiten Steuerdrucks wird das zweite Ventilglied 106 vom zweiten Einlassventilsitz 112 abgehoben, so dass das geöffnete zweite Einlassventil 108 die zweite Arbeitskammer 86 mit der zweiten Drucklufteingangskammer 88 zu verbinden mag.

Die an diesem ersten Bremszylinder 2a erzeugte Bremskraft wirkt dann zusammen mit den an der Hinterachse im intakten zweiten Bremskreis II erzeugten Bremskräften, um das Fahrzeug abzubremsen.

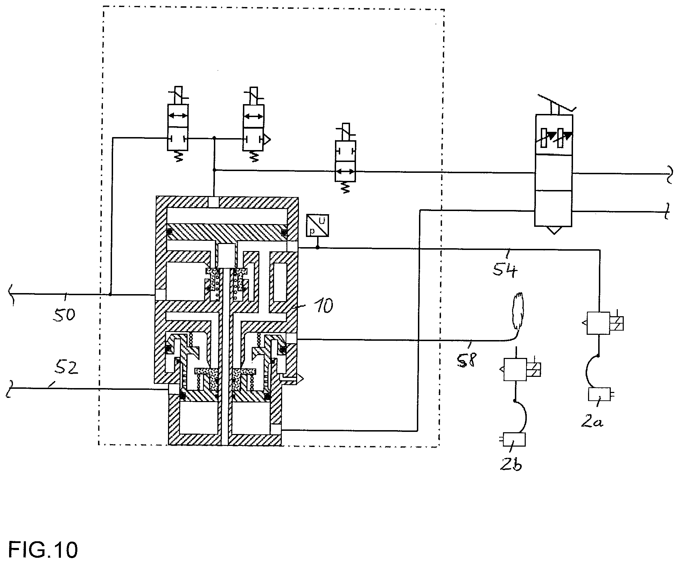

**Fig.10** zeigt dann die Abschlussstellung der Relaisventileinrichtung 10 im Zustand Bremsen bei einem Ausfall der Funktion des zweiten Bremszylinders 2b der linken Fahrzeugseite bedingt durch einen Druckluftverlust in der zweiten Bremsleitung 58.

Weil daher die Relaisventileinrichtung 10 so ausgebildet oder aufgebaut ist, dass einerseits ein Druckverlust in dem dem betreffenden Bremskreis I oder II zugeordneten Druckluftvorrat 24, 34 durch eine Druckluftversorgung aus dem dritten Druckluftvorrat 48 kompensiert wird, und dass andererseits Leckagen in den Bremsleitungen 54, 58 durch die weiterhin intakte Funktion des von der Leckage nicht betroffenen Bremszylinders 2a bzw. 2b kompensiert wird, ist eine Bremsung mit dem verbleibenden Bremszylinder 2a bzw. 2b des Vorderachs-Bremskreises I sichergestellt.

Zudem ist auch Kreistrennung gewährleistet, weil der dritte Druckluftvorrat 48 dem vom ersten Bremskreis I und vom zweiten Bremskreis II abweichenden Druckluftverbraucherkreis zugeordnet ist.

### Bezugszeichenliste

- 1: Druckregelmodul
- 2a/b: Bremszylinder
- 4: Modulgehäuse
- 6: Einlass-/Auslassmagnetventilkombination
- 8: Backup-Magnetventil
- 10: Relaisventileinrichtung
- 12: erster Arbeitsanschluss
- 14: Drucksensor
- 16: Steuergerät
- 18: elektrischer Kanal
- 20: Fußbremsmodul
- 22: erster Vorratsanschluss
- 24: erster Druckluftvorrat
- 26: erster Steueranschluss
- 28: erster Kanal
- 30: ABS-Drucksteuerventil
- 32: zweiter Kanal
- 34: zweiter Druckluftvorrat
- 36: Fußbremsplatte
- 38: Ventilblock
- 40: Einlassventil
- 42: Auslassventil
- 44: Entlüftung
- 46: zweiter Vorratsanschluss
- 48: dritter Druckluftvorrat
- 50: erste Vorratsleitung
- 52: zweite Vorratsleitung
- 54: erste Bremsleitung
- 56: zweiter Arbeitsanschluss
- 58: zweite Bremsleitung
- 60: zweiter Steueranschluss
- 62: erste Arbeitskammer
- 64: erste Drucklufteingangskammer
- 66: Entlüftung
- 68: erstes Ventilglied
- 70: erstes Doppelsitzventil
- 72: erstes Einlassventil
- 74: erstes Auslassventil
- 76: erster Relaiskolben
- 78: erste Federmittel
- 80: erster Einlassventilsitz
- 82: erster Auslassventilsitz
- 84: erste Steuerkammer
- 86: zweite Arbeitskammer
- 88: zweite Drucklufteingangskammer
- 90: zweite Steuerkammer
- 92: zweiter Relaiskolben
- 94: Verbindungskanal
- 96: zweites Auslassventil
- 98: zweites Doppelsitzventil
- 100: Fahrzeugbremseinrichtung
- 102: erste Wirkfläche
- 104: zweite Wirkfläche
- 106: zweites Ventilglied
- 108: zweites Einlassventil
- 110: zweite Federmittel
- 112: zweiter Einlassventilsitz
- 114: zweiter Auslassventilsitz
- 116: dritte Federmittel
- 118: Fußbremsplatte

## Patentansprüche

1. Relaisventileinrichtung (10) für eine pneumatische oder elektro-pneumatische Kraftfahrzeugbremseinrichtung (100) mit einem ersten Bremskreis (I) und einem zweiten Bremskreis (II), wobei die Relaisventileinrichtung (10) in oder an einem Ventilblock (38) wenigstens folgendes beinhaltet:
a) einen ersten Arbeitsanschluss (12) für einen ersten, einer ersten Fahrzeugseite zugeordneten pneumatischen Bremszylinder (2a) des ersten Bremskreises (I), welcher mit einer ersten Arbeitskammer (62) verbunden ist, in welcher ein erster Arbeitsdruck ansteht,
b) einen ersten Vorratsanschluss (22) für wenigstens einen ersten, dem ersten Bremskreis (I) zugeordneten Druckluftvorrat (24), welcher mit einer ersten Drucklufteingangskammer (64) verbunden ist,
c) eine Entlüftung (66), welche mit der Atmosphäre verbunden ist,
d) ein erstes, ein erstes Ventilglied (68) beinhaltendes Doppelsitzventil (70) als kombiniertes Einlass-/Auslassventil, über dessen erstes Einlassventil (72) die erste Arbeitskammer (62) mit der ersten Drucklufteingangskammer (64) und über dessen erstes Auslassventil (74) die erste Arbeitskammer (62) mit der Entlüftung (66) verbindbar ist,
e) einen ersten, im Ventilblock (38) beweglich geführten Relaiskolben (76), der das erste Doppelsitzventil (70) betätigt, und
f) einen ersten Steueranschluss (26), welcher mit einer ersten Steuerkammer (84) verbunden ist, zur Einsteuerung eines ersten Steuerdrucks des ersten Bremskreises (I) in die erste Steuerkammer (84), um den ersten Relaiskolbens (76) zu betätigen, **dadurch gekennzeichnet, dass** im weiteren in oder an dem Ventilblock (38) wenigstens Folgendes vorgesehen ist:
g) ein zweiter Arbeitsanschluss (56) für einen zweiten, einer zweiten Fahrzeugseite zugeordneten pneumatischen Bremszylinder (2b) des ersten Bremskreises (I), welcher mit einer zweiten Arbeitskammer (86) verbunden ist, in welcher ein zweiter Arbeitsdruck ansteht,
h) ein zweiter Vorratsanschluss (46) für wenigstens einen dritten Druckluftvorrat (48), welcher einem vom ersten Bremskreis (I) und vom zweiten Bremskreis (II) abweichenden Druckluftverbraucherkreis zugeordnet ist, wobei der zweite Vorratsanschluss (46) mit einer zweiten Drucklufteingangskammer (88) verbunden ist,
i) ein zweiter Steueranschluss (60), welcher mit einer zweiten Steuerkammer (90) verbunden ist, zur Einsteuerung eines zweiten Steuerdrucks des zweiten Bremskreises (II) in die zweite Steuerkammer (60),
j) ein zweiter, im Ventilblock (38) beweglich geführter Relaiskolben (92), von welchem eine erste Wirkfläche (102) von dem in der zweiten Arbeitskammer (86) herrschenden zweiten Arbeitsdruck und von welchem eine zweite Wirkfläche (104) von dem zweiten Steuerdruck in der zweiten Steuerkammer (90) beaufschlagt ist,
k) ein zweites, ein zweites Ventilglied (106) beinhaltendes Doppelsitzventil (98) als kombiniertes Einlass-/Auslassventil, über dessen zweites Einlassventil (108) die zweite Arbeitskammer (86) mit der zweiten Drucklufteingangskammer (88) und über dessen zweites Auslassventil (96) die zweite Arbeitskammer (86) mit der ersten Arbeitskammer (62) verbindbar ist,
l) wobei die Relaisventileinrichtung (10) weiterhin so ausgebildet ist, dass
I1) bei entlüfteter erster Steuerkammer (84) und entlüfteter zweiter Steuerkammer (90) zum Herstellen des Zustands "Fahren" das erste Auslassventil (74) die erste Arbeitskammer (62) mit der Entlüftung (66) und das zweite Auslassventil (96) die zweite Arbeitskammer (86) mit der ersten Arbeitskammer (62) verbindet, wobei das erste Einlassventil (72) und das zweite Einlassventil (108) geschlossen sind,
I2) bei belüfteter erster Steuerkammer (84) und belüfteter zweiter Steuerkammer (90) zum Herstellen des Zustands "Bremsen" das erste Einlassventil (72) die erste Arbeitskammer (62) mit der ersten Drucklufteingangskammer (64) und das zweite Auslassventil (96) die zweite Arbeitskammer (86) mit der ersten Arbeitskammer (62) verbindet, wobei das erste Auslassventil (74) und das zweite Einlassventil (108) geschlossen sind,
I3) bei einem Ausfall des ersten Bremskreises (I) bedingt durch einen Druckverlust des ersten Druckluftvorrats (24) bei dann entlüfteter erster Steuerkammer (84) und belüfteter zweiter Steuerkammer (90) zum Herstellen des Zustands "Bremsen" das erste Auslassventil (74) die erste Arbeitskammer (62) mit der Entlüftung (66) und das zweite Einlassventil (108) die zweite Arbeitskammer (86) mit der zweiten Drucklufteingangskammer (88) verbindet, wobei das erste Einlassventil (72) und das zweite Auslassventil (96) geschlossen sind,
I4) bei einem Ausfall der Funktion des ersten Bremszylinders (2a) bedingt durch einen Druckluftverlust zwischen dem ersten Arbeitsanschluss (12) und dem ersten Bremszylinder (2a) oder bei einem Ausfall der Funktion des zweiten Bremszylinders (2b) bedingt durch einen Druckluftverlust zwischen dem zweiten Arbeitsanschluss (56) und dem zweiten Bremszylinder (2b) bei belüfteter erster Steuerkammer (84) und belüfteter zweiter Steuerkammer (90) zum Herstellen des Zustands "Bremsen" das erste Einlassventil (72) die erste Arbeitskammer (62) mit der ersten Drucklufteingangskammer (64) und das zweite Einlassventil (108) die zweite Arbeitskammer (86) mit der zweiten Drucklufteingangskammer (88) verbindet, wobei das erste Auslassventil (74) und das zweite Auslassventil (96) geschlossen sind.

2. Relaisventileinrichtung nach Anspruch 1, **dadurch gekennzeichnet, dass** der erste Bremskreis (I) ein Vorderachs-Betriebsbremskreis und der zweite Bremskreis (II) ein Hinterachs-Betriebsbremskreis ist.

3. Relaisventileinrichtung nach einem der vorhergehenden Ansprüche, **dadurch gekennzeichnet, dass** die erste Wirkfläche (102) des zweiten Relaiskolbens (92) größer als dessen zweite Wirkfläche (104) ist.

4. Relaisventileinrichtung nach einem der vorhergehenden Ansprüche, **dadurch gekennzeichnet, dass** ein in dem Ventilblock (38) ausgebildeter Verbindungskanal (94) die erste Arbeitskammer (62) mit dem zweiten Auslassventil (96) des zweiten Doppelsitzventils (98) und bei geöffnetem zweitem Auslassventil (96) mit der zweiten Arbeitskammer (86) verbindet.

5. Relaisventileinrichtung nach einem der vorhergehenden Ansprüche, **dadurch gekennzeichnet, dass** wenigstens das erste Doppelsitzventil (70), das erste Ventilglied (68), der erste Relaiskolben (76), das zweite Doppelsitzventil (98), das zweite Ventilglied (106) und der zweite Relaiskolben (92) in dem Ventilblock (38) koaxial angeordnet sind.

6. Relaisventileinrichtung nach einem der vorhergehenden Ansprüche, **dadurch gekennzeichnet, dass** das erste Ventilglied (68) gegen einen ersten Einlassventilsitz (80) des ersten Einlassventils (72) durch erste Federmittel (78) vorgespannt ist und dass der erste Relaiskolben (76) das erste Ventilglied (68) gegen die Wirkung der ersten Federmittel (78) vom ersten Einlassventilsitz (80) abhebt, wenn die erste Steuerkammer (84) belüftet ist.

7. Relaisventileinrichtung nach Anspruch 6, **dadurch gekennzeichnet, dass** an dem ersten Relaiskolben (76) ein erster Auslassventilsitz (82) des ersten Auslassventils (74) ausgebildet ist, welcher bei belüfteter erster Steuerkammer (84) gegen das erste Ventilglied (68) dichtet.

8. Relaisventileinrichtung nach einem der vorhergehenden Ansprüche, **dadurch gekennzeichnet, dass** das zweite Ventilglied (106) an dem im Ventilblock (36) geführten zweiten Relaiskolben (92) beweglich geführt ist und gegen einen am zweiten Relaiskolben (92) ausgebildeten zweiten Einlassventilsitz (112) des zweiten Einlassventils 108) durch zweite, sich am zweiten Relaiskolben (92) abstützende Federmittel (110) vorgespannt ist.

9. Relaisventileinrichtung nach einem der vorhergehenden Ansprüche, **dadurch gekennzeichnet, dass** an dem Ventilblock (38) ein zweiter Auslassventilsitz (114) des zweiten Auslassventils (96) ausgebildet ist, welcher mit dem zweiten Ventilglied (106) zusammenwirkt.

10. Relaisventileinrichtung nach Anspruch 9, **dadurch gekennzeichnet, dass** der zweite Relaiskolben (92) am Ventilblock (38) durch dritte Federmittel (116) in eine das zweite Ventilglied (106) vom zweiten Auslassventilsitz (114) abhebende Richtung vorgespannt ist.

11. Elektro-pneumatisches Druckregelmodul (1), welches außer wenigstens einer Relaisventileinrichtung (10) nach einem der vorhergehenden Ansprüche wenigstens eine Einlass-/Auslassmagnetventilkombination (6), wenigstens ein Backup-Magnetventil (8) sowie wenigstens ein elektronisches, die Einlass-/Auslassmagnetventilkombination (6) und das Backup-Magnetventil (8) steuerndes Steuergerät (16) aufweist.

12. Elektro-pneumatisches Druckregelmodul nach Anspruch 11, **dadurch gekennzeichnet, dass** der erste Steueranschluss (26) der Relaisventileinrichtung (10) sowohl von einem von der Einlass-/Auslassventilkombination (6) ausgesteuerten Steuerdruck als auch von einem vom Backup-Magnetventil (8) ausgesteuerten Steuerdruck beaufschlagbar ist.

13. Elektro-pneumatisches Druckregelmodul nach Anspruch 11 oder 12, **dadurch gekennzeichnet, dass** die wenigstens eine Einlass-/Auslassmagnetventilkombination (6), das wenigstens eine Backup-Magnetventil (8) und das wenigstens eine elektronische Steuergerät (16) in einem Modulgehäuse (4) angeordnet sind, wobei das Modulgehäuse (4) an den Ventilblock (38) der Relaisventileinrichtung (10) angeflanscht ist oder der Ventilblock (38) der Relaisventileinrichtung (10) einen Teil des Modulgehäuses (4) ausbildet oder in dem Modulgehäuse (4) integriert ist.

14. Elektro-pneumatisches Druckregelmodul nach einem der Ansprüche 11 bis 13, **dadurch gekennzeichnet, dass** es einen mit dem ersten Arbeitsanschluss (12) der Relaisventileinrichtung (10) in Verbindung stehenden Drucksensor (14) umfasst, welcher den Ist-Druck am ersten Arbeitsanschluss (12) repräsentierende Signale in das elektronische Steuergerät (16) für einen Soll-Ist-Abgleich einsteuert.

15. Elektro-pneumatische Kraftfahrzeugbremseinrichtung (100) mit einem ersten Bremskreis (I), einem zweiten Bremskreis (II) und wenigstens einem elektropneumatischen Druckregelmodul (1) nach einem der vorhergehenden Ansprüche.

16. Kraftfahrzeugbremseinrichtung nach Anspruch 15, **dadurch gekennzeichnet, dass** das Backup-Magnetventil (8) des Druckregelmoduls (1) eingangsseitig mit einem ersten, dem ersten Bremskreis (I) zugeordneten Kanal (28) eines elektro-pneumatischen Bremswertgebers (20) und ausgangsseitig mit dem ersten Steueranschluss (26) der Relaisventileinrichtung (10) verbunden ist.

17. Kraftfahrzeugbremseinrichtung nach Anspruch 16, **dadurch gekennzeichnet, dass** der zweite Steueranschluss (60) der Relaisventileinrichtung des Druckregelmoduls (1) mit einem zweiten, dem zweiten Bremskreis (II) zugeordneten Kanal (32) des elektro-pneumatischen Bremswertgebers (20) verbunden ist.

18. Kraftfahrzeugbremseinrichtung nach Anspruch 16 oder 17, **dadurch gekennzeichnet, dass** ein elektrischer Kanal (18) des elektropneumatischen Bremswertgebers (20) einem Sollwert des Bremsdrucks repräsentierende elektrische Signale in das elektronische Steuergerät (16) des Druckregelmoduls (1) einsteuert.

19. Kraftfahrzeugbremseinrichtung nach einem der Ansprüche 15 bis 18, **dadurch gekennzeichnet, dass** der zweite Vorratsanschluss (46) der Relaisventileinrichtung (10) des Druckregelmoduls (1) mit einem dritten Druckluftvorrat (48) verbunden ist, welcher einem vom ersten Bremskreis (I) und vom zweiten Bremskreis (II) abweichenden Druckluftverbraucherkreis zugeordnet ist.

20. Kraftfahrzeugbremseinrichtung nach einem der Ansprüche 15 bis 19, **dadurch gekennzeichnet, dass** der erste Vorratsanschluss (22) der Relaisventileinrichtung (10) des Druckregelmoduls (1) an einen dem ersten Bremskreis (I) zugeordneten ersten Druckluftvorrat (24) angeschlossen ist.

21. Kraftfahrzeugbremseinrichtung nach einem der Ansprüche 15 bis 20, **dadurch gekennzeichnet, dass** ein erster, einer ersten Fahrzeugseite zugeordneter pneumatischer Bremszylinder (2a) an den ersten Arbeitsanschluss (12) und ein zweiter, einer zweiten Fahrzeugseite zugeordneter pneumatischer Bremszylinder (2b) an den zweiten Arbeitsanschluss (56) der Relaisventileinrichtung (10) des Druckregelmoduls (1) mittelbar oder unmittelbar angeschlossen ist.

22. Fahrzeug mit einer Kraftfahrzeugbremseinrichtung (100) nach einem der Ansprüche 15 bis 21.

## Claims

1. Relay valve device (10) for a pneumatic or electro-pneumatic motor vehicle braking system (100), with a first brake circuit (I) and a second brake circuit (II), wherein the relay valve device (10) in or on a valve block (38) comprises at least the following:
a) a first working port (12) for a first pneumatic brake cylinder (2a) of the first brake circuit (I), which cylinder is associated with a first side of the vehicle, the said port being connected to a first working chamber (62) in which a first working pressure is present,
b) a first supply port (22) for at least a first compressed-air reservoir (24) associated with the first brake circuit (I), which port is connected to a first compressed-air inlet chamber (64),
c) a vent (66) which is open to the atmosphere,
d) a first double-seat valve (70) comprising a first valve element (68), the said valve being a combined inlet/outlet valve, by way of the first inlet valve (72) of which the first working chamber (62) can be connected to the first compressed-air inlet chamber (64) and by way of the first outlet valve (74) of which the first working chamber (62) can be connected to the vent (66),
e) a first relay piston (76) which is guided and can move in the valve block (38), which piston actuates the first double-seat valve (70), and
f) a first control port (26), which is connected to a first control chamber (84), for delivering a first control pressure of the first brake circuit (I) to the first control chamber (84) in order to actuate the first relay piston (76),
**characterised in that**
in addition, in or on the valve block (38) at least the following are provided:
g) a second working port (56) for a second pneumatic brake cylinder (2b) of the first brake circuit (I), which cylinder is associated with a second side of the vehicle, the said port being connected to a second working chamber (86) in which a second working pressure is present,
h) a second supply port (46) for at least one third compressed-air reservoir (48), which is associated with a compressed-air consumer circuit different from the first brake circuit (I) and the second brake circuit (II), wherein the second supply port (46) is connected to a second compressed-air inlet chamber (88),
i) a second control port (60), which is connected to a second control chamber (90), for delivering a second control pressure of the second brake circuit (II) to the said second control chamber (60),
j) a second relay piston (92) which is guided and can move in the valve block (38), a first effective surface (102) of which piston is acted upon by the second working pressure present in the second working chamber (86) and a second effective surface of which piston is acted upon by the second control pressure present in the second control chamber (90),
k) a second double-seat valve (98) comprising a second valve element (106), the said valve being a combined inlet/outlet valve, by way of the second inlet valve (108) of which the second working chamber (86) can be connected to the second compressed-air inlet chamber (88) and by way of the second outlet valve (96) of which the second working chamber (62) can be connected to the first working chamber (62),
l) wherein the relay valve device (10) is moreover so configured that:
11) when the first and second control chambers (84, 90) are both vented, to produce the "Drive" condition the first outlet valve (74) connects the first working chamber (62) to the vent (66) and the second outlet valve (96) connects the second working chamber (86) to the first working chamber (62), whereas the first inlet valve (72) and the second inlet valve (108) are both closed,
12) when the first and second control chambers (84, 90) are both aerated, to produce the "Brake" condition the first inlet valve (72) connects the first working chamber (62) to the first compressed-air inlet chamber (64) and the second outlet valve (96) connects the second working chamber (86) to the first working chamber (62), whereas the first outlet valve (74) and the second inlet valve (108) are both closed,
13) if the first brake circuit (I) should fail due to a loss of pressure in the first compressed-air reservoir (24) when the first control chamber (84) is vented and the second control chamber (90) is aerated, then to produce the "Brake" condition the first outlet valve (74) connects the first working chamber (62) to the vent (66) and the second inlet valve (108) connects the second working chamber (86) to the second compressed-air inlet chamber (88), whereas the first inlet valve (72) and the second outlet valve (96) are both closed,
14) if the function of the first brake cylinder (2a) fails due to a loss of compressed-air between the first working port (12) and the first brake cylinder (2a), or if the function of the second brake cylinder (2b) fails due to a loss of compressed-air between the second working port (56) and the second brake cylinder (2b) when the first control chamber (84) and the second control chamber (90) are both aerated, then to produce the "Brake" condition the first inlet valve (72) connects the first working chamber (62) to the first compressed-air inlet chamber (64) and the second inlet valve (108) connects the second working chamber (86) to the second compressed-air inlet chamber (88), whereas the first outlet valve (74) and the second outlet valve (96) remain closed.

2. Relay valve device according to Claim 1, **characterised in that** the first brake circuit (I) is a front axle service brake circuit and the second brake circuit (II) is a rear axle service brake circuit.

3. Relay valve device according to either of the preceding Claims, **characterised in that** the first effective surface (102) of the second relay piston (92) is larger than its second effective surface (104).

4. Relay valve device according to any of the preceding claims, **characterised in that** a connecting duct (94) formed in the valve block (38) connects the first working chamber (62) to the second outlet valve (96) of the second double-seat valve (98) and, when the second outlet valve (96) is open, to the second working chamber (86).

5. Relay valve device according to any of the preceding claims, **characterised in that** at least the first double-seat valve (70), the first valve element (68), the first relay piston (76), the second double-seat valve (98), the second valve element (106) and the second relay piston (92) are arranged coaxially in the valve block (38).

6. Relay valve device according to any of the preceding claims, **characterised in that** the first valve element (68) is prestressed toward a first inlet valve seat (80) of the first inlet valve (72) by a first spring means (78) and, against the action of the first spring means (78), the first relay piston (76) lifts the first valve element (68) clear of the first inlet valve seat when the first control chamber (84) is aerated.

7. Relay valve device according to Claim 6, **characterised in that** a first outlet valve seat (82) of the first outlet valve (74) is formed on the first relay piston (76) which, when the first control chamber (84) is aerated, forms a seal against the first valve element (68).

8. Relay valve device according to any of the preceding claims, **characterised in that** the second valve element (106) is guided and can move on the second relay piston (92) which is guided in the valve block (38), and is prestressed by a second spring means (110) supported on the second relay piston (92) toward a second inlet valve seat (112) of the second inlet valve (108), formed on the second relay piston (92).

9. Relay valve device according to any of the preceding claims, **characterised in that** a second outlet valve seat (114) of the second outlet valve (96) is formed on the valve block (38), which valve seat co-operates with the second valve element (108).

10. Relay valve device according to Claim 9, **characterised in that** on the valve block (38) the second relay piston (92) is prestressed by a third spring means (116) in a direction such that the second valve element (106) is lifted clear of the second outlet valve seat (114).

11. Electro-pneumatic pressure regulating module (1) which, apart from at least one relay valve device (10) according to any of the preceding claims, comprises at least one inlet/outlet solenoid valve combination (6), at least one back-up solenoid valve (8) and at least one electronic control unit (16) that controls the inlet/outlet solenoid valve combination (6) and the back-up solenoid valve (8).

12. Electro-pneumatic pressure regulating module according to Claim 11, **characterised in that** the first control port (26) of the relay valve device (10) is acted upon both by a control pressure adjusted by means of the inlet/outlet valve combination and also by a control pressure adjusted by means of the back-up solenoid valve (8).

13. Electro-pneumatic pressure regulating module according to Claims 11 or 12, **characterised in that** the at least one inlet/outlet valve combination (6), the at least one back-up solenoid valve (8) and the at least one electronic control unit (16) are arranged in a module housing (4), wherein the module housing (4) is flange-mounted on the valve block (38) of the relay valve device (10), or the valve block (38) of the relay valve device (10) forms part of the module housing (4) or is integrated in the module housing (4).

14. Electro-pneumatic pressure regulating module according to any of Claims 11 to 13, **characterised in that** it comprises a pressure sensor (14) connected to the first working port (12) of the relay valve device (10), which sensor delivers a signal representing the actual pressure at the first working port (12) to the electronic control unit (16) for the purpose of actual value/nominal value comparison.

15. Electro-pneumatic motor vehicle braking system (100) with a first brake circuit (I), a second brake circuit (II) and at least one electro-pneumatic pressure regulating module (1) according to any of the preceding claims.

16. Motor vehicle braking system according to Claim 15, **characterised in that** the back-up solenoid valve (8) of the pressure regulating module (1) is connected on its inlet side to a first channel (28) of an electro-pneumatic braking value encoder (20), which channel is associated with the first brake circuit (I), and on its outlet side to the first control port (26) of the relay valve device (10).

17. Motor vehicle braking system according to Claim 16, **characterised in that** the second control port (60) of the relay valve device (10) of the pressure regulating module (1) is connected to a channel (32) of the electro-pneumatic braking value encoder (20), which channel is associated with the second brake circuit (II).

18. Motor vehicle braking system according to Claims 16 or 17, **characterised in that** an electrical channel (18) of the electro-pneumatic braking value encoder (20) delivers electrical signals representing a setpoint value of the braking pressure to the control unit (16) of the pressure regulating module (1).

19. Motor vehicle braking system according to any of Claims 15 to 18, **characterised in that** the second supply port (46) of the relay valve device (10) of the pressure regulating module (1) is connected to a third compressed-air reservoir (48), which is associated with a compressed-air consumer circuit different from the first brake circuit (I) and the second brake circuit (II).

20. Motor vehicle braking system according to any of Claims 15 to 19, **characterised in that** the first supply port (22) of the relay valve device (10) of the pressure regulating module (1) is connected to a first compressed-air reservoir (24) associated with the first brake circuit (I).

21. Motor vehicle braking system according to any of Claims 15 to 20, **characterised in that** a first pneumatic brake cylinder (2a) associated with a first side of the vehicle is connected indirectly or directly to the first working port (12) of the relay valve device (10) of the pressure regulating module (1) and a second pneumatic brake cylinder (2b) associated with a second side of the vehicle is connected indirectly or directly to the second working port (56) of the relay valve device (10) of the pressure regulating module (1).

22. Vehicle with a motor vehicle braking system according to any of Claims 15 to 21.

## Revendications

1. Dispositif (10) de vanne relais d'un dispositif (100) pneumatique ou électropneumatique de frein de véhicule automobile, comprenant un premier circuit (I) de frein et un deuxième circuit (II) de frein, le dispositif (10) de vanne relais comportant, dans ou sur un bloc (38) de vanne, au moins ce qui suit :
a) un premier raccord (12) de travail, pour un premier cylindre (2a) de frein pneumatique, associé à un premier côté du véhicule, du premier circuit (I) de frein, lequel est relié à une première chambre (62) de travail, dans laquelle règne une première pression de travail,
b) un premier raccord (22) de réservoir, pour au moins un premier réservoir (24) d'air comprimé associé au premier circuit (I) de frein, lequel est relié à une première chambre (64) d'entrée d'air comprimé,
c) une purge (66), qui est reliée à l'atmosphère,
d) une première vanne (70) à siège double, comportant un premier obturateur (68) et sous la forme d'une vanne combinée d'entrée/sortie, par la première vanne (72) d'entrée de laquelle la première chambre (62) de travail peut être reliée à la première chambre (64) d'entée d'air comprimé et par la première vanne (74) de sortie de laquelle la première chambre (62) de travail peut être reliée à la purge (66),
e) un premier piston (76) relais, qui est guidé en étant mobile dans le bloc (38) de vanne et qui actionne la première vanne (70) à siège double, et
f) un premier raccord (26) de commande, qui est relié à une première chambre (84) de commande pour appliquer une première pression de commande du premier circuit (I) de frein à la première chambre (84) de commande, afin d'actionner le premier piston (76) relais, **caractérisé en ce qu'**il est prévu, en outre, dans ou sur le bloc (38) de vanne, au moins ce qui suit :
g) un deuxième raccord (56) de travail, pour un deuxième cylindre (2b) de frein pneumatique, associé au deuxième côté du véhicule, du premier circuit (I) de frein, lequel est relié à une deuxième chambre (86) de travail, dans laquelle règne une deuxième pression de travail,
h) un deuxième raccord (46) de réservoir, pour au moins un troisième réservoir (48) d'air comprimé, qui est associé à un circuit de consommateur d'air comprimé se distinguant du premier circuit (I) de frein et du deuxième circuit (II) de frein, le deuxième raccord (46) de réservoir étant relié à une deuxième chambre (88) d'entrée d'air comprimé,
i) un deuxième raccord (60) de commande, qui est relié à une deuxième chambre (90) de commande, pour appliquer une deuxième pression de commande du deuxième circuit (II) de frein à la deuxième chambre (60) de commande,
j) un deuxième piston (92) relais, qui est guidé en étant mobile dans le bloc (38) de vanne, dont une première surface (102) active est soumise à la deuxième pression de travail régnant dans la deuxième chambre (86) de travail et dont une deuxième surface (104) active est soumise à la deuxième pression de commande dans la deuxième chambre (90) de commande,
k) une deuxième vanne (98) à siège double, comportant un deuxième obturateur (106) et sous la forme d'une vanne combinée d'entrée/sortie, par la deuxième vanne (108) d'entrée de laquelle la deuxième chambre (86) de travail peut être reliée à la deuxième chambre (88) d'entrée d'air comprimé et par la deuxième vanne (96) de sortie de laquelle la deuxième chambre (86) de travail peut être reliée à la première chambre (62) de travail,
l) le dispositif (10) de vanne relais étant constitué, en outre, de manière à ce que
I1) lorsque la première chambre (84) de commande est purgée et lorsque la deuxième chambre (90) de commande est purgée, pour obtenir l'état « marche », la première vanne (74) de sortie relie la première chambre (62) de travail à la purge (66) et la deuxième vanne (96) de sortie relie la deuxième chambre (86) de travail à la première chambre (62) de travail, la première vanne (72) d'entrée et la deuxième vanne (108) d'entrée étant fermées,
I2) lorsque la première chambre (84) de commande est alimentée en air et lorsque la deuxième chambre (90) de commande est alimentée en air, pour obtenir l'état « freinage », la première vanne (72) d'entrée relie la première chambre (62) de travail à la première chambre (64) d'entrée d'air comprimé et la deuxième vanne (96) de sortie relie la deuxième chambre (86) de travail à la première chambre (62) de travail, la première vanne (74) de sortie et la deuxième vanne (108) d'entrée étant fermées,
I3) s'il se produit une défaillance du premier circuit (I) de frein due à une perte de pression du premier réservoir (24) d'air comprimé, alors que la première chambre (84) de commande est purgée et que la deuxième chambre (90) de commande est alimentée en air, pour obtenir l'état « freinage », la première vanne (74) de sortie relie la première chambre (62) de travail à la purge (66) et la deuxième vanne (108) d'entrée relie la deuxième chambre (86) de travail à la deuxième chambre (88) d'entrée d'air comprimé, la première vanne (72) d'entrée et la deuxième vanne (96) de sortie étant fermées,
I4) s'il se produit une défaillance du fonctionnement du premier cylindre (2a) de frein due à une perte d'air comprimé entre le premier raccord (12) de travail et le premier cylindre (2a) de frein ou s'il se produit une défaillance du fonctionnement du deuxième cylindre (2b) de frein due à une perte d'air comprimé entre le deuxième raccord (56) de travail et le deuxième cylindre (2b) de frein, alors que la première chambre (84) de commande est alimentée en air et que la deuxième chambre (90) de commande est alimentée en air, pour obtenir l'état « freinage », la première vanne (72) d'entrée relie la première chambre (62) de travail à la première chambre (64) d'entrée d'air comprimé et la deuxième vanne (108) d'entrée relie la deuxième chambre (86) de travail à la deuxième chambre (88) d'entrée d'air comprimé, la première vanne (74) de sortie et la deuxième vanne (96) de sortie étant fermées.

2. Dispositif de vanne relais suivant la revendication 1, **caractérisé en ce que** le premier circuit (I) de frein est un circuit de frein de service d'essieu avant et le deuxième circuit (II) de frein est un circuit de frein de service d'essieu arrière.

3. Dispositif de vanne relais suivant l'une des revendications précédentes, **caractérisé en ce que** la première surface (102) active du deuxième piston (92) relais est plus grande que sa deuxième surface (104) active.

4. Dispositif de vanne relais suivant l'une des revendications précédentes, **caractérisé en ce qu'**un conduit (94) de liaison, constitué dans le bloc (38) de vanne, relie la première chambre (62) de travail à la deuxième vanne (96) de sortie de la deuxième vanne (98) à siège double et, lorsque la deuxième vanne (96) de sortie est ouverte, à la deuxième chambre (86) de travail.

5. Dispositif de vanne relais suivant l'une des revendications précédentes, **caractérisé en ce qu'**au moins la première vanne (70) à siège double, le premier obturateur (68), le premier piston (76) relais, la deuxième vanne (98) à siège double, le deuxième obturateur (106) et le deuxième piston (92) relais sont disposés coaxialement dans le bloc (38) de vanne.

6. Dispositif de vanne relais suivant l'une des revendications précédentes, **caractérisé en ce que** le premier obturateur (68) est précontraint par des premiers moyens (78) de ressort sur un premier siège (80) de la première vanne (72) d'entrée et **en ce que** le premier piston (76) relais soulève le premier obturateur (68) du premier siège (80) de vanne d'entrée à l'encontre de l'effet des premiers moyens (78) de ressort, si la première chambre (84) de commande est alimentée en air.

7. Dispositif de vanne relais suivant la revendication 6, **caractérisé en ce que**, sur le premier piston (76) de relais, est constitué un premier siège (82) de la première vanne (74) de sortie, qui, lorsque la première chambre (84) de commande est alimentée en air, va d'une manière étanche sur le premier obturateur (68).

8. Dispositif de vanne relais suivant l'une des revendications précédentes, **caractérisé en ce que** le deuxième obturateur (106) est guidé en étant mobile sur le deuxième piston (92) relais, guidé dans le bloc (36) de vanne, et est précontraint par des deuxièmes moyens (110) de ressort s'appuyant sur le deuxième piston (92) relais sur un deuxième siège (112), constitué sur le deuxième piston (92) relais de la deuxième vanne (108) d'entrée.

9. Dispositif de vanne relais suivant l'une des revendications précédentes, **caractérisé en ce que**, sur le bloc (38) de vanne, est constitué un deuxième siège (114) de la deuxième vanne (96) de sortie, qui coopère avec le deuxième obturateur (106).

10. Dispositif de vanne relais suivant la revendication 9, **caractérisé en ce que** le deuxième piston (92) relais du bloc (38) de vanne est précontraint par des troisièmes moyens (116) de ressort dans un sens soulevant le deuxième obturateur (106) du deuxième siège (114) de vanne de sortie.

11. Module (1) électropneumatique de réglage de la pression, qui a, outre au moins, un dispositif (10) de vanne relais suivant l'une des revendications précédentes, au moins une combinaison (6) d'électrovanne d'entrée/sortie, au moins une électrovanne (8) de backup, ainsi qu'au moins un appareil (16) électronique de commande, commandant la combinaison (6) d'électrovanne d'entrée/sortie et l'électrovanne (8) de backup.

12. Module électropneumatique de réglage de la pression suivant la revendication 11, **caractérisé en ce que** le premier raccord (26) de commande du dispositif (10) de vanne relais peut être alimenté tant par une pression de commande commandée par la combinaison (6) de vanne d'entrée/sortie, qu'également par une pression de commande commandée par l'électrovanne (8) de backup.

13. Module électropneumatique de réglage de la pression suivant la revendication 11 ou 12, **caractérisé en ce que** la au moins une combinaison (6) d'électrovanne d'entrée/sortie, la au moins une électrovanne (8) de backup et le au moins un appareil (16) électronique de commande sont disposés dans un boîtier (4) de module, le boîtier (4) de module étant bridé sur le bloc (38) de vanne du dispositif (10) de vanne relais ou le bloc (38) de vanne du dispositif (10) de vanne relais constituant une partie du boîtier (4) du module ou étant intégré au boîtier (4) du module.

14. Module électropneumatique de réglage de la pression suivant l'une des revendications 1 à 13, **caractérisé en ce qu'**il comprend un capteur (14) de pression, qui est en liaison avec le premier raccord (12) de travail du dispositif (10) de vanne relais et qui envoie, pour une égalisation consigne-réel, à l'appareil (16) électronique de commande, des signaux représentant la pression réelle au premier raccord (12) de travail.

15. Dispositif (100) électropneumatique de frein de véhicule automobile, comprenant un premier circuit (I) de frein, un deuxième circuit (II) de frein et au moins un module (1) électropneumatique de réglage de la pression suivant l'une des revendications précédentes.

16. Dispositif de frein de véhicule automobile suivant la revendication 15, **caractérisé en ce que** l'électrovanne (18) de backup du module (1) de réglage de la pression est reliée, du côté de l'entrée, à un premier conduit (28), associé au premier circuit (I) de frein, d'un indicateur (20) électropneumatique de valeur de frein et, du côté de la sortie, au premier raccord (26) de commande du dispositif (10) de vanne relais.

17. Dispositif de frein de véhicule automobile suivant la revendication 16, **caractérisé en ce que** le deuxième raccord (60) de commande du dispositif de vanne relais du module (1) de réglage de la pression est relié à un deuxième canal (32), associé au deuxième circuit (II) de frein, de l'indicateur (20) électropneumatique de valeur de frein.

18. Dispositif de frein de véhicule automobile suivant la revendication 16 ou 17, **caractérisé en ce qu'**un canal (18) électrique de l'indicateur (20) électropneumatique de valeur de frein envoie, à l'appareil (16) électronique de commande du module (1) de réglage de la pression, des signaux électriques représentant une valeur de consigne de la pression de frein.

19. Dispositif de frein de véhicule automobile suivant l'une des revendications 15 à 18, **caractérisé en ce que** le deuxième raccord (46) de réservoir du dispositif (10) de vanne relais du module (1) de réglage de la pression est relié à un troisième réservoir (48) d'air comprimé, qui est associé à un circuit de consommateur d'air comprimé se distinguant du premier circuit (I) de frein et du deuxième circuit (II) de frein.

20. Dispositif de frein de véhicule automobile suivant l'une des revendications 15 à 19, **caractérisé en ce que** le premier raccord (22) de réservoir du dispositif (10) de vanne relais du module (1) de réglage de la pression est raccordé à un premier réservoir (24) d'air comprimé associé au premier circuit (I) de frein.

21. Dispositif de frein de véhicule automobile suivant l'une des revendications 15 à 20, **caractérisé en ce qu'**un premier cylindre (2a) de frein pneumatique, associé à un premier côté du véhicule, est raccordé directement ou indirectement au premier raccord (12) de travail et un deuxième cylindre (2b) de frein pneumatique, associé à un deuxième côté du véhicule, est raccordé directement ou indirectement au deuxième raccord (56) de travail du dispositif (10) de vanne relais du module (1) de réglage de la pression.

22. Véhicule ayant un dispositif (100) de frein de véhicule automobile suivant l'une des revendications 15 à 21.
